# EUROPEAN PATENT APPLICATION

(11) **EP 4 776 128 A1**
(43) Date of publication of application: **15.07.2026**
(21) Application number: 23951594.3
(22) Date of filing: 08.09.2023
(51) Int. Cl.: G06F 9/455, G06F 9/38, G06F 9/30, G06N 20/00

(54) **SIGNAL PROCESSING DEVICE AND DISPLAY DEVICE FOR VEHICLE INCLUDING SAME**

(71) Applicant: LG Electronics Inc., Yeongdeungpo-gu Seoul 07336 (KR)
(72) Inventor: CHOI, Sunghwan, Seoul 06772 (KR); PARK, Namyong, Seoul 06772 (KR); JUNG, Dukyung, Seoul 06772 (KR)
(74) Representative: Vossius & Partner Patentanwälte Rechtsanwälte mbB
(86) International application number: PCT/KR2023/013488
(87) International publication number: WO 2025/053308

(57) **Abstract**

A signal processing device and a display apparatus for vehicle including the same are disclosed. The signal processing device includes: at least one neural processor; and a central processor to execute a hypervisor, and the central processor is configured to execute a plurality of virtual machines, and in a state of sequentially receiving a request of a first operation, a request of a second operation, and a request of a third operation from a plurality of applications executed in at least one of the plurality of virtual machines, a first virtual machine is configured to control a first neural processor to process the first and the third operation in parallel, and process the second operation after completion of the first and the second operation in response to the first and the third operation being enabled to process in parallel. Accordingly, it is possible to efficiently operate the neural processor.

## Description

### BACKGROUND

### 1. Field

. The present disclosure relates to a signal processing device and a display apparatus for vehicle including the same, and more particularly, to a signal processing device capable of efficiently operating a neural processor and a display apparatus for vehicle including the same.

### 2. Description of the Related Art

. A vehicle is an apparatus that a driver moves in a desired direction. A representative example of the vehicle can be a car.

. On the other hand, a signal processing device is used for real time processing of various types of camera data while the vehicle is traveling.

. At this time, as the number of cameras increases, the amount of real time processing of camera data increases.

. On the other hand, when a plurality of operation requests are received from a plurality of applications at the same time, the plurality of operation requests are generally processed one by one in the order of first input first output (FIFO), resulting in a delay problem in that subsequent operation requests have to wait until a preceding operation ends.

. On the other hand, it is necessary to detect objects such as surrounding vehicles, pedestrians, and lane shapes in real time based on camera data from a front camera or a surround camera in accordance with studies of an advanced driving assistance system (ADAS) or an autonomous driving technique.

. Furthermore, it is necessary to detect the recognition of the line-of-sight of a driver or the like based on camera data from a vehicle internal camera.

. Accordingly, a method for efficiently processing data in the signal processing device in the vehicle has been studied.

### SUMMARY

. An object of the present disclosure is to provide a signal processing device capable of efficiently operating a neural processor, and a display apparatus for vehicle including the same.

. Meanwhile, another object of the present disclosure is to provide a signal processing device capable of reducing power consumption, and a display apparatus for vehicle including the same.

. In accordance with an aspect of the present disclosure, the above and other objects can be accomplished by the provision of a signal processing device and a display apparatus for vehicle including the same, which include: at least one neural processor; and a central processor configured to execute a hypervisor, and the central processor is configured to execute a plurality of virtual machines on the hypervisor, and in a state of sequentially receiving a request of a first operation, a request of a second operation, and a request of a third operation from a plurality of applications executed in at least one of the plurality of virtual machines, a first virtual machine among the plurality of virtual machines is configured to control a first neural processor to process the first operation and the third operation in parallel, and process the second operation after completion of the first operation and the third operation in response to the first operation and the third operation being enabled to process in parallel.

. Meanwhile, in response to operation layers being enabled to be shared at the time of the second operation and a fourth operation in a state of receiving a request of the fourth operation after the request of the third operation, the first virtual machine may be configured to control the first neural processor to successively process the second operation and the fourth operation after completion of the first operation and the third operation.

. Meanwhile, at the time of requesting a plurality of operations from the plurality of applications, the first virtual machine may be configured to change an arrangement of data for the plurality of operations in an internal memory in the first neural processor.

. Meanwhile, the first virtual machine may be configured to execute a neural system service for controlling the neural processor, and at the time of requesting the plurality of operations from the plurality of applications, the neural system service may be configured to change an arrangement of data for the plurality of operations in the internal memory in the first neural processor.

. Meanwhile, the first virtual machine may be configured to initialize a learning model based on a learning model initialization request from the application, receive a file related to the learning model stored in a shared memory, and store the received file related to the learning model in the internal memory in the first neural processor, control the first neural processor to process data corresponding to the first operation and data corresponding to the third operation among sensor data or camera data stored in the shared memory in parallel based on an inference request from the application, and process data corresponding to the second operation among the sensor data or camera data stored in the shared memory after the completion of the first operation and the third operation.

. Meanwhile, the first virtual machine may be configured to store processing result data of each of the first operation to the third operation in the shared memory in the hypervisor.

. Meanwhile, the first virtual machine may be configured to decrease a discretization level of the second operation from a first level to a second level in the case of an energy saving mode or in response to no object being detected for a predetermined time based on a result of the first operation.

. Meanwhile, the first virtual machine may be configured to control the first neural processor to perform the first operation to the third operation in response to the central processor not being enabled to perform the first operation to the third operation.

. Meanwhile, the first virtual machine may be configured to control the central processor to process the first operation and the third operation in parallel, and process the second operation after the completion of the first operation and the third operation in response to the central processor being enabled to perform the first operation to the third operation, and the first operation and the third operation being enabled to process in parallel.

. Meanwhile, when the second operation includes an audio data-based behavior recognition operation from a microphone and the fourth operation includes a camera data-based gaze recognition operation, the first virtual machine may be configured to store result data of the second operation in the internal memory in the first neural processor, and process the fourth operation by using at least a part of the result data stored in the internal memory.

. Meanwhile, the first neural processor may be configured to include an internal memory configured to store weight data or input data, and an operator configured to perform an operation based on data from the internal memory.

. Meanwhile, the operator in the first neural processor may be configured to perform any one of the first operation and the third operation in a first region, and perform the other one in a second region surrounding the first region.

. Meanwhile, the first neural processor may be configured to perform at least one of the first operation to the third operation based on input data of a first length according to a first quantization mode, and perform at least one of the first operation to the third operation based on input data of a second length longer than the first length according to a second quantization mode.

. Meanwhile, the first neural processor may be configured to perform at least one of the first operation to the third operation based on input data of a first length according to a first quantization mode, and perform a concatenate operation based on the input data of the first length, and difference data corresponding to the input data of the first length according to a second quantization mode, generate input data of a second length longer than the first length based on the concatenate operation, and perform at least one of the first operation to the third operation based on the input data of the second length.

. Meanwhile, the first neural processor may be configured to perform at least one of the first operation to the third operation based on the second quantization mode, and then switch to the first quantization mode in response to the number of feature points of a detection object being equal to or less than a predetermined value based on result data of at least one of the first operation to the third operation.

. Meanwhile, the first neural processor may be configured to perform at least one of the first operation to the third operation based on the second quantization mode or a daytime mode at the time of daytime driving of a vehicle, and perform at least one of the first operation to the third operation based on the first quantization mode or a night time driving mode at the time of night time driving of the vehicle.

. Meanwhile, the first virtual machine may be configured to control, in response to the first operation and the third operation being enabled to process in parallel, a first neural processor to process the first operation and the third operation in parallel, and control a second neural processor to process the second operation.

. Meanwhile, the first virtual machine may be configured to in response to a request of a fourth operation being received from the plurality of applications, control a second neural processor to process the fourth operation.

. Meanwhile, the first virtual machine may be configured to control the second neural processor to perform the fourth operation based on input data of a first length according to a first quantization mode, and control the first neural processor to perform at least one of the first operation to the third operation based on input data of a second length longer than the first length according to a second quantization mode.

. In accordance with another aspect of the present disclosure, the above and other objects can be accomplished by the provision of a signal processing device and a display apparatus for vehicle including the signal processing device, which include: a central processor configured to execute a hypervisor; and a neural processor, and the signal processing device is configured to wiredly or wirelessly exchange data with an external device including a second neural processor, the central processor is configured to execute a plurality of virtual machines on the hypervisor, and a first virtual machine is configured to transmit data to the second neural processor in the external device, in response to the external device being in a connected state.

. Meanwhile, in response to the external device being wirelessly connected, the central processor may be configured to perform wireless pairing through a communication device, and transmit data to the second neural processor in the external device after completion of the wireless pairing.

. Meanwhile, the first virtual machine may be configured to perform load balancing for load distribution between the neural processor and the second neural processor.

. Meanwhile, in response to the external device being connected, the first virtual machine may be configured to download an application for controlling the external device from a server, installed, and executed.

. Meanwhile, the first virtual machine may be configured to receive result data from the external device, and transmit the result data to the neural processor.

. Meanwhile, the first virtual machine may be configured to receive the result data from the external device and battery information, and store the result data in a shared memory in the hypervisor.

. Meanwhile, the external device may be configured to include a second signal processing device, a mobile terminal, or a server.

### EFFECTS OF THE DISCLOSURE

. According to an embodiment of the present disclosure, a signal processing device includes: at least one neural processor; and a central processor configured to execute a hypervisor, and the central processor is configured to execute a plurality of virtual machines on the hypervisor, and in a state of sequentially receiving a request of a first operation, a request of a second operation, and a request of a third operation from a plurality of applications executed in at least one of the plurality of virtual machines, a first virtual machine among the plurality of virtual machines is configured to control a first neural processor to process the first operation and the third operation in parallel, and process the second operation after completion of the first operation and the third operation in response to the first operation and the third operation being enabled to process in parallel. Accordingly, it is possible to efficiently operate the neural processor. Furthermore, power consumption may be reduced.

. Meanwhile, in response to operation layers being enabled to be shared at the time of the second operation and a fourth operation in a state of receiving a request of the fourth operation after the request of the third operation, the first virtual machine may be configured to control the first neural processor to successively process the second operation and the fourth operation after completion of the first operation and the third operation. Accordingly, it is possible to efficiently operate the neural processor.

. Meanwhile, at the time of requesting a plurality of operations from the plurality of applications, the first virtual machine may be configured to change an arrangement of data for the plurality of operations in an internal memory in the first neural processor. Accordingly, it is possible to efficiently operate the neural processor.

. Meanwhile, the first virtual machine may be configured to execute a neural system service for controlling the neural processor, and at the time of requesting the plurality of operations from the plurality of applications, the neural system service may be configured to change an arrangement of data for the plurality of operations in the internal memory in the first neural processor. Accordingly, it is possible to efficiently operate the neural processor.

. Meanwhile, the first virtual machine may be configured to initialize a learning model based on a learning model initialization request from the application, receive a file related to the learning model stored in a shared memory, and store the received file related to the learning model in the internal memory in the first neural processor, control the first neural processor to process data corresponding to the first operation and data corresponding to the third operation among sensor data or camera data stored in the shared memory in parallel based on an inference request from the application, and process data corresponding to the second operation among the sensor data or camera data stored in the shared memory after the completion of the first operation and the third operation. Accordingly, it is possible to efficiently operate the neural processor.

. Meanwhile, the first virtual machine may be configured to store processing result data of each of the first operation to the third operation in the shared memory in the hypervisor. Accordingly, the result data may be shared. Consequently, it is possible to efficiently operate the neural processor.

. Meanwhile, the first virtual machine may be configured to decrease a discretization level of the second operation from a first level to a second level in the case of an energy saving mode or in response to no object being detected for a predetermined time based on a result of the first operation. Accordingly, it is possible to efficiently operate the neural processor. Furthermore, power consumption may be reduced.

. Meanwhile, the first virtual machine may be configured to control the first neural processor to perform the first operation to the third operation in response to the central processor not being enabled to perform the first operation to the third operation. Accordingly, it is possible to efficiently operate the neural processor.

. Meanwhile, the first virtual machine may be configured to control the central processor to process the first operation and the third operation in parallel, and process the second operation after the completion of the first operation and the third operation in response to the central processor being enabled to perform the first operation to the third operation, and the first operation and the third operation being enabled to process in parallel. Accordingly, it is possible to efficiently operate the neural processor.

. Meanwhile, when the second operation includes an audio data-based behavior recognition operation from a microphone and the fourth operation includes a camera data-based gaze recognition operation, the first virtual machine may be configured to store result data of the second operation in the internal memory in the first neural processor, and process the fourth operation by using at least a part of the result data stored in the internal memory. Accordingly, it is possible to efficiently operate the neural processor.

. Meanwhile, the first neural processor may be configured to include an internal memory configured to store weight data or input data, and an operator configured to perform an operation based on data from the internal memory. Accordingly, it is possible to efficiently operate the neural processor.

. Meanwhile, the operator in the first neural processor may be configured to perform any one of the first operation and the third operation in a first region, and perform the other one in a second region surrounding the first region. Accordingly, it is possible to efficiently operate the neural processor.

. Meanwhile, the first neural processor may be configured to perform at least one of the first operation to the third operation based on input data of a first length according to a first quantization mode, and perform at least one of the first operation to the third operation based on input data of a second length longer than the first length according to a second quantization mode. Accordingly, it is possible to efficiently operate the neural processor. Furthermore, power consumption may be reduced.

. Meanwhile, the first neural processor may be configured to perform at least one of the first operation to the third operation based on input data of a first length according to a first quantization mode, and perform a concatenate operation based on the input data of the first length, and difference data corresponding to the input data of the first length according to a second quantization mode, generate input data of a second length longer than the first length based on the concatenate operation, and perform at least one of the first operation to the third operation based on the input data of the second length. Accordingly, it is possible to efficiently operate the neural processor. Furthermore, power consumption may be reduced.

. Meanwhile, the first neural processor may be configured to perform at least one of the first operation to the third operation based on the second quantization mode, and then switch to the first quantization mode in response to the number of feature points of a detection object being equal to or less than a predetermined value based on result data of at least one of the first operation to the third operation. Accordingly, it is possible to efficiently operate the neural processor. Furthermore, power consumption may be reduced.

. Meanwhile, the first neural processor may be configured to perform at least one of the first operation to the third operation based on the second quantization mode or a daytime mode at the time of daytime driving of a vehicle, and perform at least one of the first operation to the third operation based on the first quantization mode or a night time driving mode at the time of night time driving of the vehicle. Accordingly, it is possible to efficiently operate the neural processor. Furthermore, power consumption may be reduced.

. Meanwhile, the first virtual machine may be configured to control, in response to the first operation and the third operation being enabled to process in parallel, a first neural processor to process the first operation and the third operation in parallel, and control a second neural processor to process the second operation. Accordingly, it is possible to efficiently operate the neural processor. Furthermore, power consumption may be reduced.

. Meanwhile, the first virtual machine may be configured to in response to a request of a fourth operation being received from the plurality of applications, control a second neural processor to process the fourth operation. Accordingly, it is possible to efficiently operate the neural processor. Furthermore, power consumption may be reduced.

. Meanwhile, the first virtual machine may be configured to control the second neural processor to perform the fourth operation based on input data of a first length according to a first quantization mode, and control the first neural processor to perform at least one of the first operation to the third operation based on input data of a second length longer than the first length according to a second quantization mode. Accordingly, it is possible to efficiently operate the neural processor. Furthermore, power consumption may be reduced.

. According to an embodiment of the present disclosure, a signal processing device and a display apparatus for vehicle including the signal processing device, which includes: a central processor configured to execute a hypervisor; and a neural processor, and the signal processing device is configured to wiredly or wirelessly exchange data with an external device including a second neural processor, the central processor is configured to execute a plurality of virtual machines on the hypervisor, and a first virtual machine is configured to transmit data to the second neural processor in the external device, in response to the external device being in a connected state. Accordingly, it is possible to efficiently operate the neural processor. Furthermore, power consumption may be reduced.

. Meanwhile, in response to the external device being wirelessly connected, the central processor may be configured to perform wireless pairing through a communication device, and transmit data to the second neural processor in the external device after completion of the wireless pairing. Accordingly, it is possible to efficiently operate the neural processor.

. Meanwhile, the first virtual machine may be configured to perform load balancing for load distribution between the neural processor and the second neural processor. Accordingly, it is possible to efficiently operate the neural processor.

. Meanwhile, in response to the external device being connected, the first virtual machine may be configured to download an application for controlling the external device from a server, installed, and executed. Accordingly, communication with the external device may be stably performed.

. Meanwhile, the first virtual machine may be configured to receive result data from the external device, and transmit the result data to the neural processor. Accordingly, it is possible to efficiently operate the neural processor.

. Meanwhile, the first virtual machine may be configured to receive the result data from the external device and battery information, and store the result data in a shared memory in the hypervisor. Accordingly, the result data may be shared. Consequently, it is possible to efficiently operate the neural processor.

### BRIEF DESCRIPTION OF THE DRAWINGS

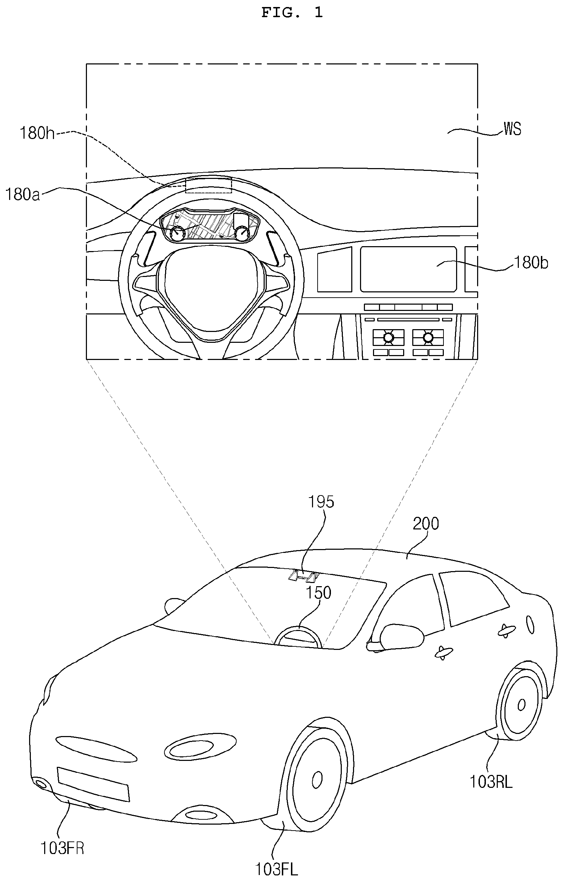

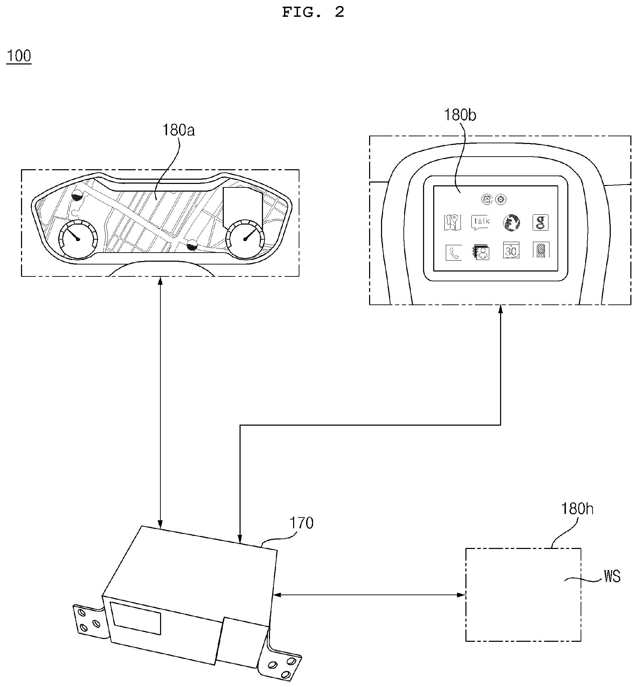

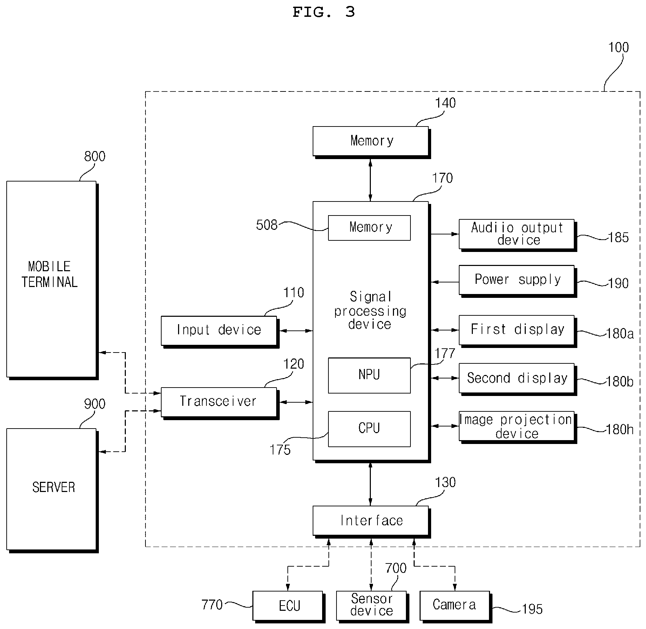

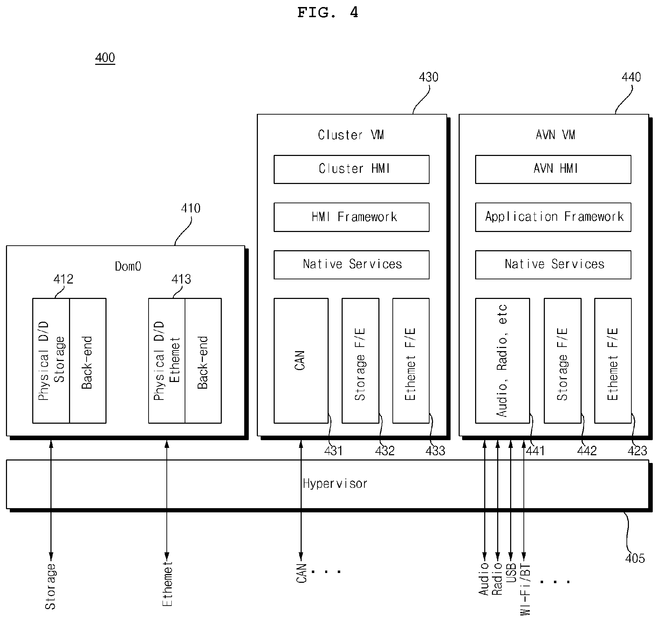

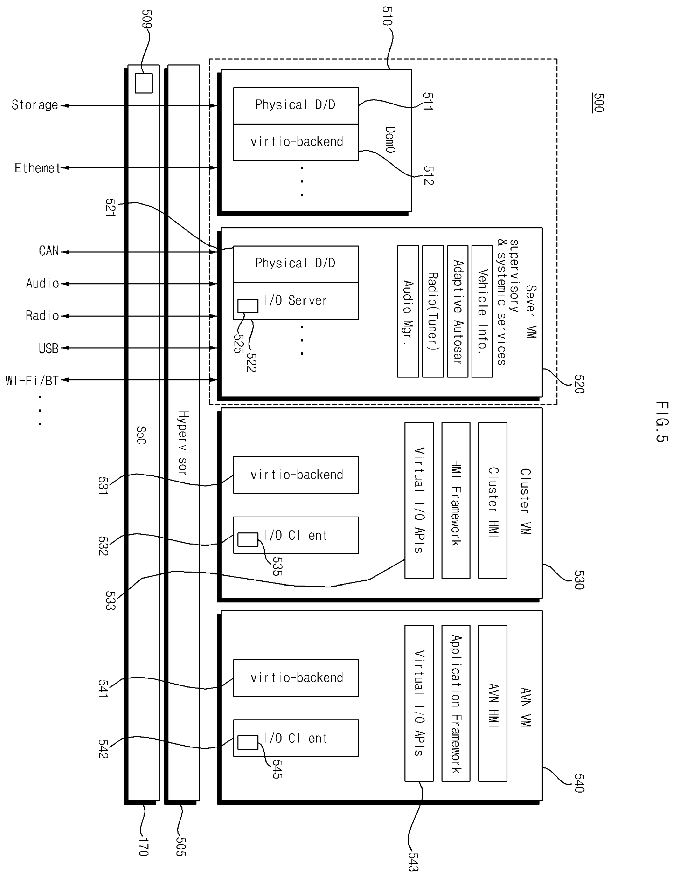

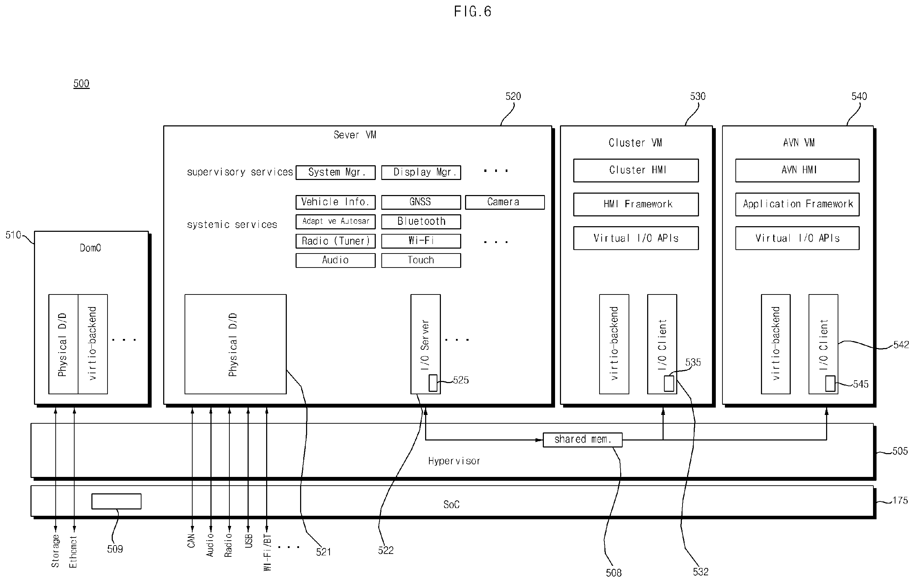

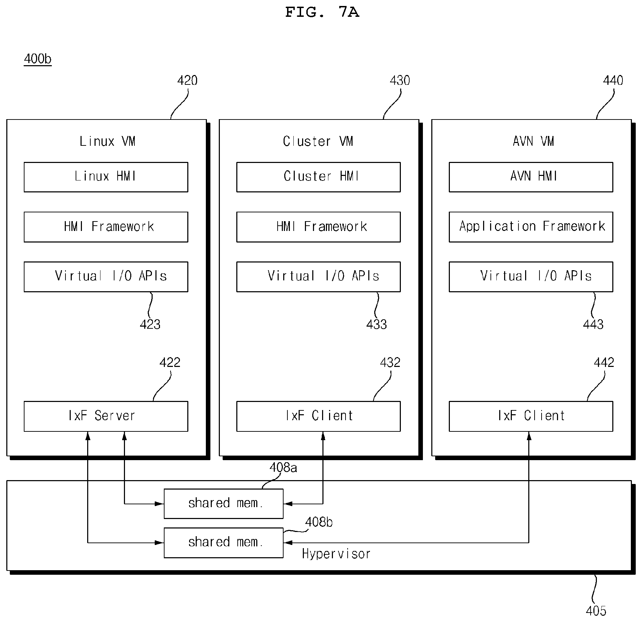

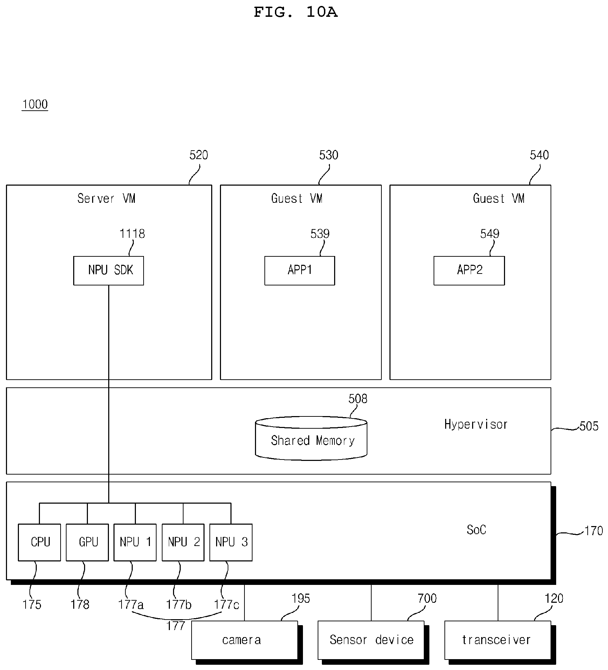

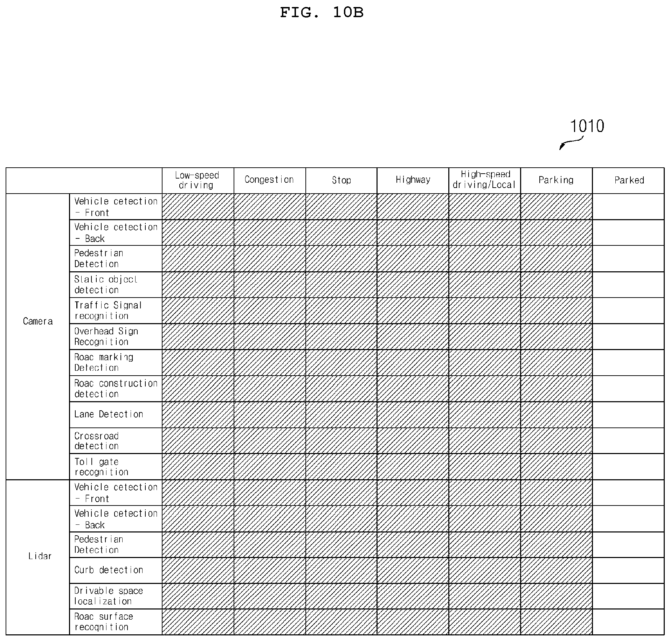

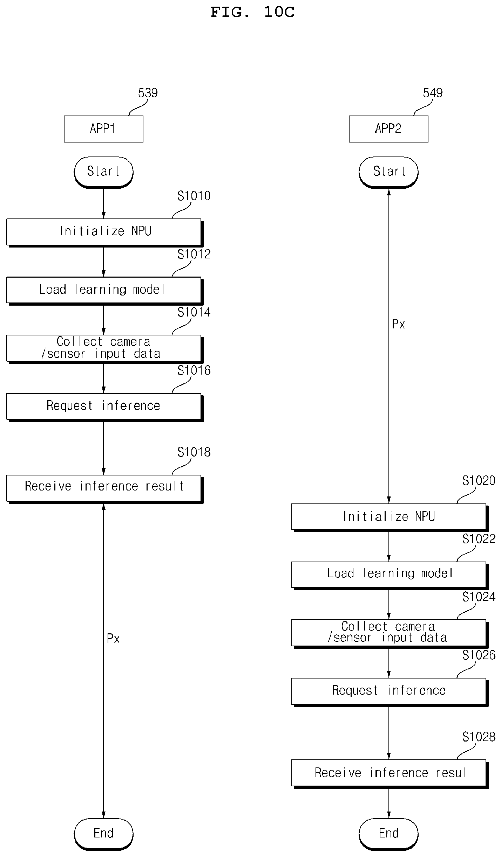

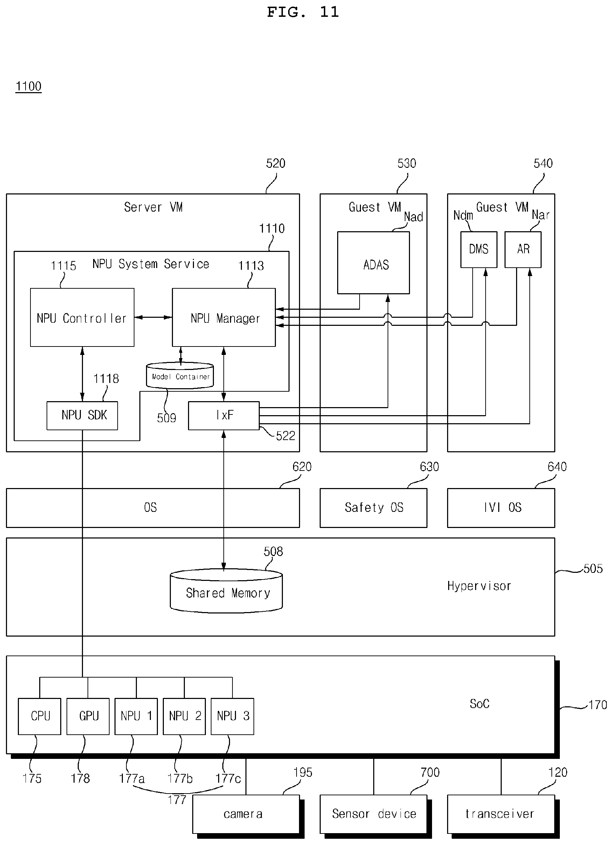

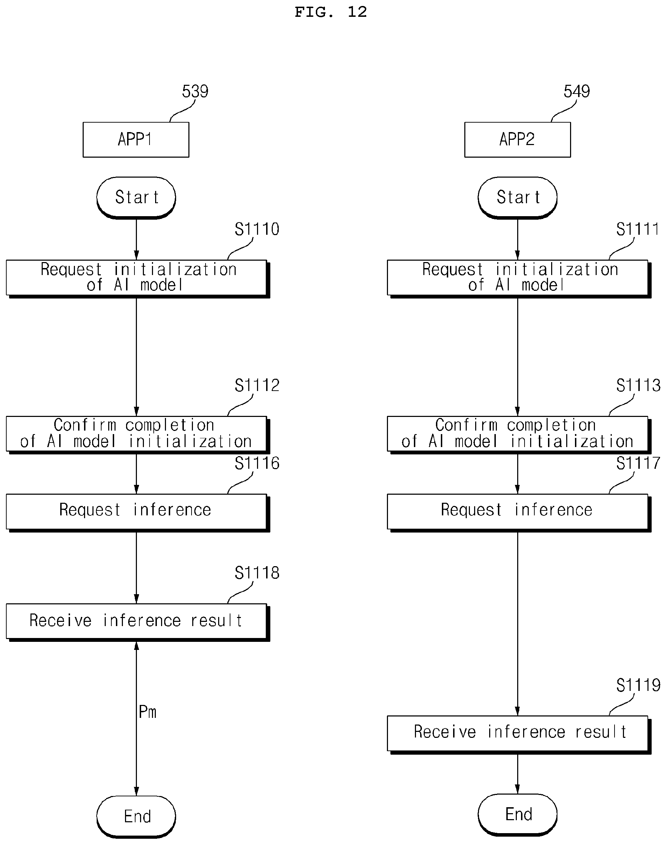

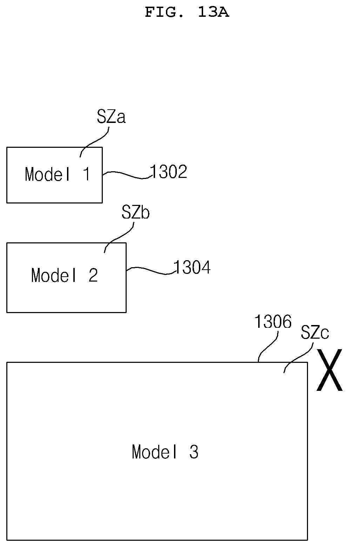

. FIG. 1 is a view showing an example of an exterior and an interior of a vehicle;
. FIG. 2 is a view showing the external appearance of a display apparatus for vehicle according to an embodiment of the present disclosure;
. FIG. 3 illustrates an example of an internal block diagram of the display apparatus for vehicle of FIG. 2;
. FIG. 4 is a view showing a system driven in a signal processing device related to the present disclosure;
. FIG. 5 is a view showing an example of a system driven in a signal processing device according to the present disclosure;
. FIG. 6 is a view referred to in the description of an operation of the system driven in the signal processing device according to the present disclosure;
. FIGS. 7A to 9D are views referred to in the description of FIG. 5 or 6;
. FIG. 10A is a view showing an example of the system driven in the signal processing device related to the present disclosure;
. FIGS. 10B and 10C are views referred to in the description of FIG. 10A;
. FIG. 11 is a view showing an example of a system driven in a signal processing device according to an embodiment of the present disclosure;
. FIG. 12 is an example of a flowchart showing an operating method of a signal processing device according to an embodiment of the present disclosure; and
. FIGS. 13A to 25B are views referred to in the description of FIG. 11 or 12.

### DETAILED DESCRIPTION OF THE PREFERRED EMBODIMENTS

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

. FIG. 1 is a view showing an example of an exterior and an interior of a vehicle.

. Referring to the figure, the vehicle 200 is moved by a plurality of wheels 103FR, 103FL, 103RL,... rotated by a power source and a steering wheel 150 configured to adjust an advancing direction of the vehicle 200.

. Meanwhile, the vehicle 200 may be provided with a camera 195 configured to acquire an image of the front of the vehicle.

. Meanwhile, the vehicle 200 may be provided therein with a plurality of displays 180a and 180b configured to display images and information, and an image projection device 180h that projects an image onto a windshield WS.

. In FIG. 1, a cluster display 180a, an audio video navigation (AVN) display 180b, and the image projection device 180h which is a head up display (HUD) are illustrated as the plurality of displays 180a and 180b.

. Meanwhile, the audio video navigation (AVN) display 180b may also be called a center information display.

. Meanwhile, the vehicle 200 described in this specification may be a concept including all of a vehicle having an engine as a power source, a hybrid vehicle having an engine and an electric motor as a power source, and an electric vehicle having an electric motor as a power source.

. FIG. 2 is a view showing the external appearance of a display apparatus for vehicle according to an embodiment of the present disclosure.

. The display apparatus 100 for vehicle according to the embodiment of the present disclosure may include the plurality of displays 180a and 180b, the image projection device 180h, and the signal processing device 170 configured to perform signal processing to display images and information on the plurality of displays 180a and 180b, and the image projection device 180h.

. The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

. The image projecting device 180h may include an optical device (not shown) for projecting an image as the head up display (HUD).

. The signal processing device 170 may include a shared memory 508 and a central processor 175 therein, and execute first to third virtual machines 520 to 540 on a hypervisor 505 in the central processor 175.

. The first virtual machine 520 may be configured to control, as a server virtual machine, a second virtual machine 530 and the third virtual machine 540 that are guest virtual machines.

. Meanwhile, the second virtual machine may be referred to as a first guest virtual machine, and the third virtual machine may be referred to as a second guest virtual machine.

. The first guest virtual machine 530 may operate for the first display 180a, and the second guest virtual machine 540 may operate for the second display 180b.

. Meanwhile, the server virtual machine 520 in the central processor 175 may be configured to control the shared memory 508 based on the hypervisor 505 to be set up for transmission of the same data to the first guest virtual machine 530 and the second guest virtual machine 540. Accordingly, the same information or the same image may be displayed synchronously on the first display 180a and the second display 180b in the vehicle.

. Meanwhile, the server virtual machine 520 in the central processor 175 may receive and process the camera data of the camera, and transmit an object based on the camera data to at least one of the first guest virtual machine 530 or the second guest virtual machine 540. Accordingly, the detected object may be shared by at least one virtual machine, etc.

. Meanwhile, the server virtual machine 520 in the central processor 175 may receive and process wheel speed sensor data of the vehicle, and transmit speed information based on the wheel speed sensor information to at least one of the first guest virtual machine 530 or the second guest virtual machine 540. Accordingly, the speed information of the vehicle may be shared by at least one virtual machine, etc.

. Accordingly, it is possible to control various displays 180a and 180b or the image projecting device 180h by using one signal processing device 170.

. Meanwhile, some of the plurality of displays 180a and 180b may operate based on a Linux OS, and others may operate based on a Web OS.

. The signal processing apparatus 170 according to the embodiment of the present disclosure may also control the displays 180a and 180b operating under various operating systems (OSs) to synchronously display the same information or the same images.

. FIG. 3 shows an example of an internal block diagram of the display apparatus for vehicle according to the embodiment of the present disclosure.

. Referring to the figure, the display apparatus 100 for vehicle according to the embodiment of the present disclosure may include an input device 110, a transceiver 120, an interface 130, a memory 140, the signal processing device 170, the plurality of displays 180a and 180b, the image projection device 180h, an audio output device 185, and a power supply 190.

. The input device 110 may include a physical button or pad for button input or touch input.

. Meanwhile, the input device 110 may include a microphone (not shown) for user voice input.

. The transceiver 120 may wirelessly exchange data with a mobile terminal 800 or a server (not shown).

. In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

. The transceiver 120 may be configured to receive weather information and road traffic situation information, such as transport protocol expert group (TPEG) information, from the mobile terminal 800 or the server (not shown). To this end, the transceiver 120 may include a mobile communication module (not shown).

. The interface 130 may receive sensor data, etc., from an ECU 770 or a sensor device 700, and transmit the received information to the signal processing device 170.

. Here, the sensor data may include at least one of vehicle direction data, vehicle position data (global positioning system (GPS) data), vehicle angle data, vehicle velocity data, vehicle acceleration data, vehicle inclination data, vehicle forward/backward movement data, battery data, fuel data, tire data, vehicle lamp data, in-vehicle temperature data, and in-vehicle humidity data.

. The sensor data may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS data.

. Meanwhile, the interface 130 may be configured to receive front-of-vehicle image data, side-of-vehicle image data, rear-of-vehicle image data, and obstacle-around-vehicle distance information from a camera 195 or lidar (not shown), and may be configured to transmit the received information to the signal processing device 170.

. The memory 140 may store various data necessary for overall operation of the display apparatus 100 for vehicle, such as programs for processing or control of the signal processing device 170.

. For example, the memory 140 may store data regarding the hypervisor, the server virtual machine 520, and the plurality of guest virtual machines for execution within the central processor 175.

. The audio output device 185 may convert an electrical signal from the signal processing device 170 into an audio signal, and may output the audio signal. To this end, the audio output device 185 may include a speaker.

. The power supply 190 may supply power necessary to operate components under control of the signal processing device 170. In particular, the power supply 190 may be configured to receive power from a battery in the vehicle.

. The image projecting device 180h may include an optical device (not shown) for projecting an image, and output an augmented reality-based object under the control of the signal processing device 170.

. For example, the video projection device 180h may output vehicle speed information, vehicle traveling direction information, a front vehicle object, a distance indicator from the front vehicle, and the like.

. As another example, the image projection device 180h may output an augmented reality lane carpet, an augmented reality route carpet, or an augmented reality dynamic carpet corresponding to a lane image.

. The signal processing device 170 may be configured to control overall operation of each device in the display apparatus 100 for vehicle.

. For example, the signal processing device 170 may include a shared memory 508, a central processor 175 that performs signal processing for the vehicular displays 180a and 180b, and at least one neural processor 177.

. The central processor 175 may execute the hypervisor (505 in FIG. 5) and execute, on the executed hypervisor (505 in FIG. 5), the server virtual machine 520 and the plurality of guest virtual machines 530 and 540.

. At this time, the first guest virtual machine 530 may operate for the first display 180a, and the second guest virtual machine 540 may operate for the second display 180b.

. For example, the server virtual machine 520 in the central processor 175 may receive, process, or process and output vehicle sensor data, location information data, camera data, audio data, or touch input data. By distinguishing data processed only by a legacy virtual machine and data processed by the server virtual machine 520, data processing may be efficiently performed. In particular, by performing most of the data processing in the server virtual machine 520, sharing of data in a 1:N scheme is enabled.

. As another example, the server virtual machine 520 may directly receive and process CAN communication data, audio data, radio data, USB data, and wireless communication data, for the first guest virtual machine and the second guest virtual machine 530 and 540.

. Then, the server virtual machine 520 may transmit the processed data to the first guest virtual machine to the second guest virtual machine 530 and 540.

. Accordingly, only the server virtual machine 520 among the server virtual machine 520, and the plurality of guest virtual machines 530 and 540 receives communication data and external input data, and performs signal processing, so that a signal processing burden on other virtual machines may be reduced, and an interface between the external input data and the communication data may be efficiently implemented. Furthermore, 1:N data communication is enabled, and synchronization at the time of data sharing is enabled.

. Meanwhile, the server virtual machine 520 may be configured to control to write data to the shared memory 508 to share the same data with the first guest virtual machine 530 and the second guest virtual machine 540.

. For example, the server virtual machine 520 may be configured to control to write the vehicle sensor data, the location information data, the camera data, or the touch input data to the shared memory 508 to share the same data with the first guest virtual machine 530 and the second guest virtual machine. This enables sharing of data of the 1:N scheme.

. Consequently, by performing most of the data processing in the server virtual machine 520, sharing of data in the 1:N scheme is enabled.

. Meanwhile, the server virtual machine 520 in the central processor 175 may be configured to control the shared memory 508 based on the hypervisor 505 to be set up for transmission of the same data to the first guest virtual machine 530 and the second guest virtual machine 540.

. That is, the server virtual machine 520 in the central processor 175 may synchronously transmit the same data to the first guest virtual machine 530 and the second guest virtual machine 540 using the shared memory 508 based on the hypervisor 505. Accordingly, the same image may be synchronously displayed on the plurality of displays 180a and 180b in the vehicle.

. Meanwhile, the signal processing device 170 may process various signals, such as an audio signal, an image signal, and a data signal. To this end, the signal processing device 170 may be implemented in the form of a system on chip (SOC).

. FIG. 4 is a view showing a system driven in a signal processing device related to the present disclosure.

. Referring to the figure, FIG. 4 is a view illustrating that virtual machines are used for the cluster display 180a and the AVN display 180b.

. The system 400 driven in the signal processing device of FIG. 4 illustrates that a cluster virtual machine 430 and an AVN virtual machine 440 are executed through a hypervisor 405 in the central processor 175.

. Meanwhile, the system 400 driven in the signal processing device of FIG. 4 illustrates that a legacy virtual machine 410 is also executed on the hypervisor 405 in the central processor 175.

. The legacy virtual machine 410 may include an interface 412 for data communication with the memory 140 and an interface 413 for Ethernet communication.

. Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

. Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

. In the system 400, there is a disadvantage in that CAN communication data are input and output only in the cluster virtual machine 430, whereby the CAN communication data cannot be utilized in the AVN virtual machine 440.

. Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

. Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

. Therefore, the present disclosure proposes a scheme for improving the system of FIG. 4. That is, unlike

FIG. 4, virtual machines are classified into a server virtual machine 520 and guest virtual machines such that various memory data and communication data are input and output not in the guest virtual machines but in the server virtual machine 520. This will be described with reference to FIG. 5 and subsequent figures.

. FIG. 5 is a view showing an example of a system driven in a signal processing device according to the present disclosure.

. Referring to the figure, the system 500 of FIG. 5 illustrates that the server virtual machine 520 which is the server virtual machine 520, the first guest virtual machine 530 which is the guest virtual machine, and the second guest virtual machine 540 which is the guest virtual machine are executed on the hypervisor 505 in the central processor 175 in the signal processing device 170.

. The first guest virtual machine 530 may be a virtual machine for the cluster display 180a, and the second guest virtual machine 540 may be a virtual machine for the AVN display 180b.

. That is, the first guest virtual machine 530 and the second guest virtual machine 540 may operate for rendering images of the cluster display 180a and the AVN display 180b, respectively.

. Meanwhile, the system 50 driven in the signal processing device 170 of FIG. 5 illustrates that a legacy virtual machine 510 is also executed on the hypervisor 505 in the central processor 175.

. The legacy virtual machine 510 may include an interface 511 for data communication with the memory 140 and Ethernet communication.

. Meanwhile, the legacy virtual machine 510 may further include a virtio-backend interface 512 for data communication with the first and second guest virtual machines 530 and 540.

. The server virtual machine 520 may include an interface 521 for input and output of the audio data, radio data, USB data, and wireless communication data, and an input and output server interface 522 for data communication with the guest virtual machine.

. That is, the server virtual machine 520, which is the server virtual machine 520, may provide I/Os that are difficult to be virtualized by a standard virtualization technology (VirtIO) to multiple guest virtual machines, for example, the first to second guest virtual machines 530 and 540, and the like.

. Meanwhile, the server virtual machine 520, which is the server virtual machine 520, may be configured to control radio data, audio data, and the like at a supervisor level and provide the radio data, the audio data, and the like to multiple guest virtual machines, for example, the first and second guest virtual machines 530 and 540, and the like.

. Meanwhile, the server virtual machine 520, which is the server virtual machine 520, may process vehicle data, sensor data, vehicle surroundings information, and the like, and provide the processed data or information and the like to multiple guest virtual machines, for example, the first and second guest virtual machines 530 and 540, and the like.

. Meanwhile, the server virtual machine 520 may provide supervisory services, such as processing of vehicle data, audio routing management, and the like.

. Next, the first guest virtual machine 530 may include an input and output client interface 532 for data communication with the server virtual machine 520, and APIs 533 that control the input and output client interface 532.

. Further, the first guest virtual machine 530 may include an interface (virtio-backend interface) for data communication with the legacy virtual machine 510.

. The first guest virtual machine 530 may receive, via the interface (virtio-backend interface), memory data by communication with the memory 140 and Ethernet data by Ethernet communication, from the interface 512 of the legacy virtual machine 510.

. Next, the second guest virtual machine 540 may include an input and output client interface 542 for data communication with the server virtual machine 520, and APIs 543 that control the input and output client interface 542.

. Further, the second guest virtual machine 540 may include an interface (virtio-backend interface) for data communication with the legacy virtual machine 510.

. The second guest virtual machine 540 may receive, via the interface (virtio-backend interface), memory data by communication with the memory 140 and Ethernet data by Ethernet communication, from the interface 512 of the legacy virtual machine 510.

. Meanwhile, unlike FIG. 5, the legacy virtual machine 510 may be included in the server virtual machine 520.

. According to the system 500 in FIG. 5, CAN communication data such as sensing data is input and output only by the server virtual machine 520, but may be provided to multiple guest virtual machines, for example, the first and second guest virtual machines 530 and 540, and the like through data processing in the server virtual machine 520. Accordingly, 1:N data communication by processing of the server virtual machine 520 is enabled.

. Further, according to the system 500, the audio data, the radio data, the USB data, and the wireless communication data are input and output only by the server virtual machine 520, but may be provided to multiple guest virtual machines, for example, the first and second guest virtual machines 530 and 540, and the like, through data processing in the server virtual machine 520. Accordingly, 1:N data communication by processing of the server virtual machine 520 is enabled.

. Meanwhile, in the system 500 of FIG. 5, the first and second guest virtual machines 530 and 540 may operate based on different OSs.

. For example, the first guest virtual machine 540 may operate based on the Linux OS and the second guest virtual machine 540 may operate based on the Web OS.

. The server virtual machine 520 sets up the shared memory 508 based on the hypervisor 505 for data sharing, even though the first and second guest virtual machines 530 and 540 operate based on different OSs. This allows the first and second guest virtual machines 530 and 540 to synchronously share the same data or the same images, even though the first and second guest virtual machines 530 and 540 operate under different operating systems (OSs). Accordingly, the same data or the same image may be synchronously displayed on the plurality of displays 180a and 180b.

. FIG. 6 is a view referred to in the description of an operation of the system driven in the signal processing device according to the present disclosure, and FIGS. 7A to 9B are views referred to in the description of FIG. 5 or 6.

. First, according to the system 500 in FIG. 6, the central processor 175 in the signal processing device 170 executes the server virtual machine 520 and the plurality of guest virtual machines 530 and 540 on the hypervisor 505 in the central processor 175, and the server virtual machine 520 in the central processor 175 controls the shared memory 508 based on the hypervisors 505 to be set up for data transmission to the first guest virtual machine 530 and the second guest virtual machine 540.

. For example, the server virtual machine 520 may send the same image data, as an example of the same data, to the first guest virtual machine 530 and the second guest virtual machine 540. Accordingly, the same image may be synchronously displayed on the plurality of displays 180a and 180b in the vehicle.

. Meanwhile, according to the system 500 in FIG. 6, the central processor 175 in the signal processing device 170 may execute the server virtual machine 520 and the plurality of guest virtual machines 530 and 540 on the hypervisor 505 in the central processor 175, and the server virtual machine 520 in the central processor 175 may synchronously transmit the same data to the first guest virtual machine 530 and the second guest virtual machine 540 by using the shared memory 508 based on the hypervisors 505.

. For example, as the same data, the CAN communication data, the audio data, the radio data, the USB data, the wireless communication data, the location information data, or the touch data may be illustrated. Accordingly, the same data may be synchronously displayed on the plurality of displays 180a and 180b in the vehicle.

. Meanwhile, the server virtual machine 520 in the central processor 175 may receive, process, and provide location information data that varies with movement to the first guest virtual machine 530 or the second guest virtual machine 540. Accordingly, data communication in the 1:N scheme is enabled using the shared memory, rather than the data communication in the 1:1 scheme between virtual machines.

. Meanwhile, the first guest virtual machine 530 and the second guest virtual machine 540 may be driven by different operating systems. Accordingly, even though the plurality of virtual machines 520, 530, and 540 are driven by different operating systems, high-speed data communication may be performed.

. Meanwhile, although not shown in FIG. 6, the legacy virtual machine 510 may synchronously transmit the memory data from the memory 140 and the Ethernet data by Ethernet communication, to the first guest virtual machine 530 and the second guest virtual machine 540 by using the shared memory 508 based on the hypervisor 505. That is, 1:N data communication for the memory data or the Ethernet data may be performed. Accordingly, the same data may be synchronously transmitted.

. Meanwhile, the server virtual machine 520 in the central processor 175 may execute a system manager, a display manager, or the like as a supervisory service.

. Meanwhile, the server virtual machine 520 in the central processor 175 may execute, as a systemic service, a vehicle information service, a location information service, a camera service, an automotive open system architecture (AUTOSAR), a Bluetooth communication service, a radio service, a Wi-Fi service, an audio service, a touch service, and the like.

. FIG. 7A illustrates that three virtual machines 420, 420, and 430 operate in the system 400b of FIG. 7A.

. Referring to the figure, the server virtual machine 420 as a Linux-based virtual machine may include an input and output server interface 422 for data transmission, and the first guest virtual machine 530 and the second guest virtual machine 540 may include input and output client interfaces 432 and 442 for data communication with the input and output server interface 422.

. For example, the server virtual machine 420 needs to set up a first shared memory 408a in the hypervisor 405 in order to transmit first data to the first guest virtual machine 430, and the server virtual machine needs to set up a second shared memory 408b apart from the first shared memory 408a in the hypervisor 405 in order to transmit the same first data to the second guest virtual machine 440.

. In the case of transmitting the same first data, when a separate shared memory is used as shown in FIG. 7A, there is a disadvantage in that resources are wasted, and synchronization is not easy.

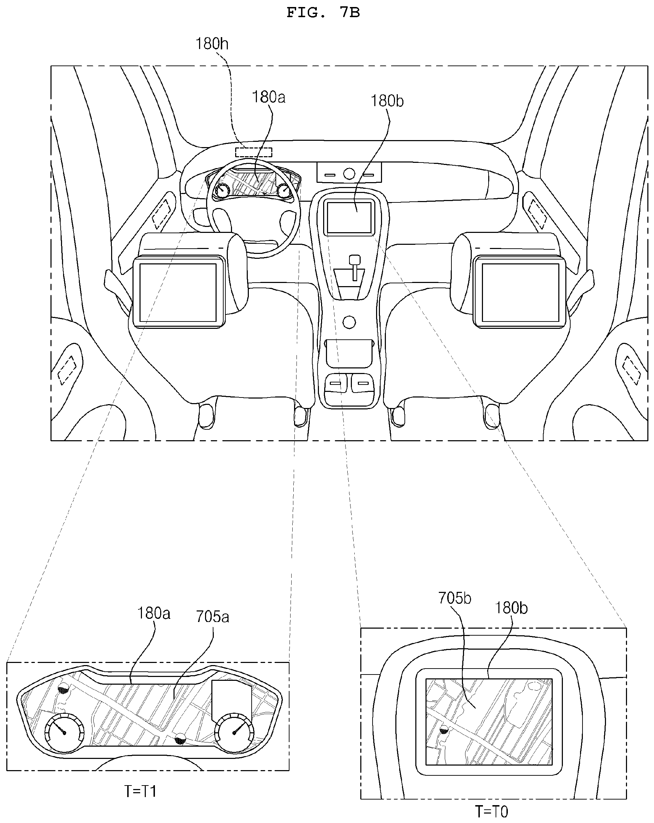

. FIG. 7B illustrates that, by the system 400b of FIG. 7A, the first guest virtual machine 430 displays image data received via the first shared memory 408a on the first display 180a, and the second guest virtual machine 440 displays image data received via the second shared memory 408b on the second display 180b.

. FIG. 7B illustrates that an image 705a displayed on the first display 180a and an image 705b displayed on the second display 180b are not synchronized with each other, and the image 705b displayed on the second display 180b corresponds to a previous frame to the image 705a displayed on the first display 180a.

. In this way, when the server virtual machine 420 uses the separate shared memory as shown in FIG. 7A in the case of transmitting the same image data, there is a disadvantage that synchronization at the time of image display is not performed as in FIG. 7B.

. In order to solve such a problem, the present disclosure proposes a method for allocating one shared memory at the time of transmitting the same data. Accordingly, the 1:N data communication is performed, and transmission of synchronized data is enabled.

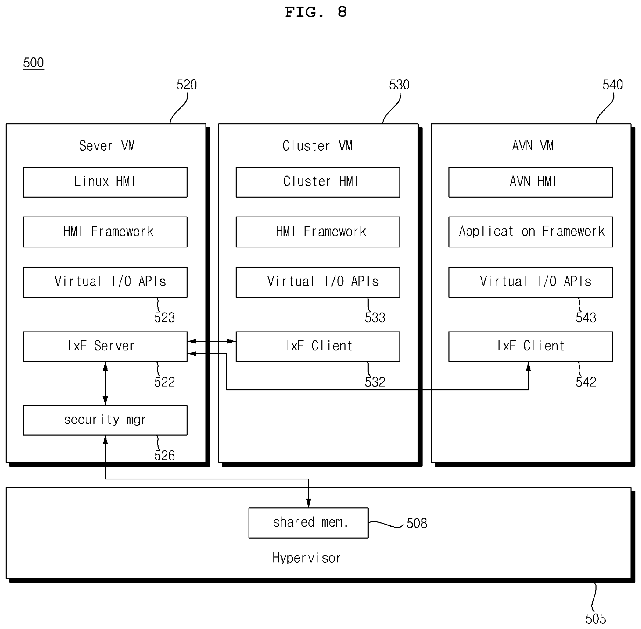

. FIG. 8 illustrates that the server virtual machine 520 and the plurality of guest virtual machines 530 and 540 are executed on the hypervisor 505 in the central processor 175 in the system 500 according to the embodiment of the present disclosure, and the server virtual machine 520 in the central processor 175 controls the shared memory 508 based on the hypervisors 505 to be set up for transmitting the same data to the first guest virtual machine 530 and the second guest virtual machine 540.

. Consequently, the plurality of displays 180a and 180b in the vehicle may be configured to display the same images in a synchronized state.

. Meanwhile, high-speed data communication may be performed among the plurality of virtual machines 520, 530, and 540. Furthermore, even though the plurality of virtual machines 520, 530, and 540 are driven by different operating systems, the high-speed data communication may be performed.

. Meanwhile, the server virtual machine 520 in the central processor 175 may use one shared memory 508, rather than allocation of memories of a number corresponding to the number of virtual machines, when transmitting data processed by the server virtual machine 520 to other virtual machines. Accordingly, the data communication in the 1:N scheme is enabled using the shared memory 508, rather than the data communication in the 1:1 scheme between the virtual machines.

. Meanwhile, the server virtual machine 520 in the central processor 175 may include an input and output server interface 522 and a security manager 526.

. Meanwhile, the first guest virtual machine 530 and the second guest virtual machine 540 may include input and output client interfaces 532 and 542, respectively. Accordingly, the high-speed data communication among the plurality of virtual machines 520, 530, and 540 may be performed using the input and output server interface 522 and the input and output client interfaces 532 and 542.

. The input and output server interface 522 in the server virtual machine 520 may receive the same data transmission request from each of the input and output client interfaces 532 and 542 in the first guest virtual machine 530 and the second guest virtual machine 540, and based thereon, transmit the shared data to the shared memory 508, via the security manager 526.

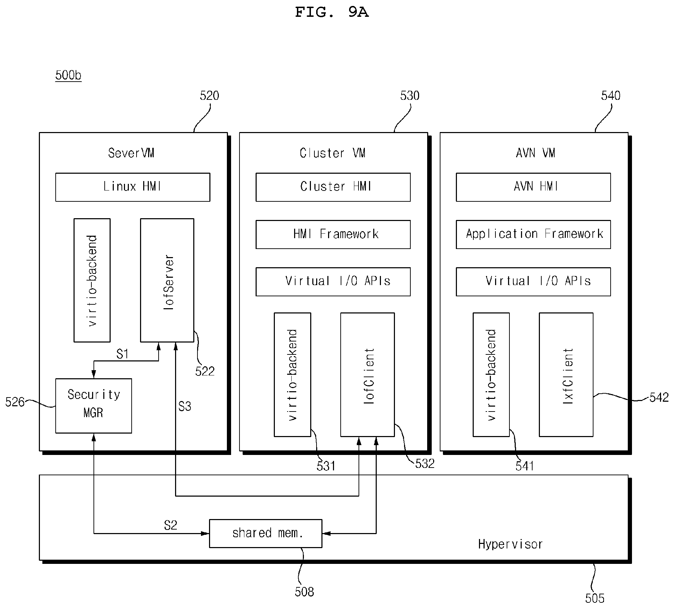

. FIG. 9A is a view illustrating transmission of shared data in more detail.

. Referring to the figure, in order to transmit shared data, the input and output server interface 522 in the server virtual machine 520 is configured to transmit a request for allocation of the shared memory 508 to the security manager 526 (S1).

. Subsequently, the security manager 526 may be configured to allocate the shared memory 508 using the hypervisor 505 (S2), and may write shared data in the shared memory 508.

. Meanwhile, the input and output client interfaces 532 and 542 may be configured to transmit a request for connection to the input and output server interface 522 after allocation of the shared memory 508 (S3).

. Meanwhile, the input and output server interface 522 is configured to transmit information regarding the shared memory 508 including key data to the input and output client interfaces 532 and 542 after allocation of the shared memory 508 (S4). At this time, the key data may be data for data access.

. Meanwhile, the server virtual machine 520 in the central processor 175 may transmit information regarding the shared memory 508 to the first guest virtual machine 530 and the second guest virtual machine 540 after the setting of the shared memory 506.

. The input and output client interfaces 532 and 542 may access the shared memory 508 based on the received key data (S5) and copy the shared data from the shared memory 508.

. Accordingly, the shared memory 508 is accessible at the first guest virtual machine 530 and the second guest virtual machine 540, which consequently enables sharing of the shared data.

. For example, when the shared data is image data, the image data is shared by the first guest virtual machine 530 and the second guest virtual machine 540, so that the same shared image may be displayed synchronously on the plurality of displays 180a and 180b in the vehicle.

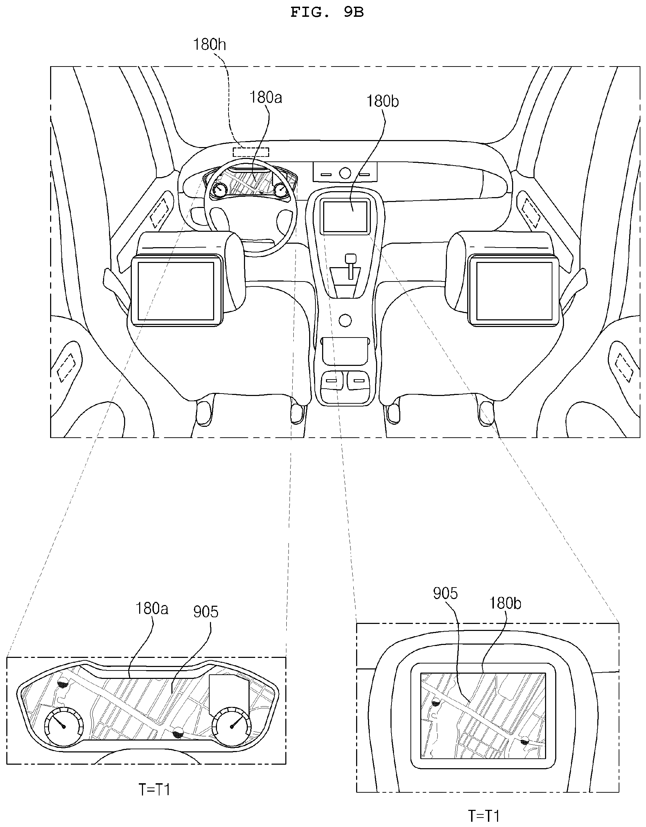

. FIG. 9B illustrates that, by the system 500b in FIG. 9A, the first guest virtual machine 530 displays the image data received via the shared memory 508 on the first display 180a, and the second guest virtual machine 540 displays the image data receive via the shared memory 508b on the second display 180b.

. FIG. 9B illustrates that the image 905 displayed on the first display 180a and the image 905 displayed on the second display 180b are synchronized to display the same image.

. That is, the image data processed by the server virtual machine 520 in the central processor 175 may be transmitted to the first guest virtual machine 530 and the second guest virtual machine 540 via the shared memory 508, and based on the image data, the first image 905 displayed on the first display 180a and the second image 905 displayed in the second display 180b may be the same as each other . Accordingly, the same image may be synchronously displayed on the plurality of displays 180a and 180b in the vehicle. Further, the high-speed data communication may be performed among the plurality of virtual machines 520, 530, and 540.

. FIG. 10A is a view showing an example of the system driven in the signal processing device related to the present disclosure.

. Referring to the figure, the signal processing device 170 related to the present disclosure may include a central processor 175, a plurality of neural processors 177a to 177c, and a graphic processor 178.

. The system 1000 driven by the signal processing device 170 related to the present disclosure may execute the hypervisor 505 in the central processor 175, and execute the plurality of virtual machines 520 to 540 on the hypervisor505.

. The first virtual machine 520 among the plurality of virtual machines 520 to 540 may execute a neural interface 1118 for interfacing with the neural processors 177a to 177c, and the second virtual machine 530 and the third virtual machine 540 may execute applications 539 and 549, respectively.

. Meanwhile, when a first application 539 is executed by the second virtual machine 530, the first virtual machine 520 performs a first inference request corresponding to the first application 539 with the neural processors 177a to 177c, and after receiving the first inference result from the neural processors 177a to 177c, performs a second inference request corresponding to a second application 549, and receives the second inference result from the neural processors 177 a to 177c.

. According to such a scheme, when a plurality of operation requests are received from the plurality of applications 539 and 549 at the same time, the plurality of operation requests are generally processed one by one in the order of first input first output (FIFO), resulting in a delay problem in that subsequent operation requests have to wait until a preceding operation ends.

. FIG. 10B illustrates that the signal processing device 170 of FIG. 10A receives camera data from the camera 195 and performs vehicle detection-front, vehicle detection-back, pedestrian detection, static object detection, traffic signal detection, overhead sign recognition, road marking detection, road construction detection, lane detection, crossroad detection, toll gate recognition, and the like based on the received camera data.

. Meanwhile, FIG. 10B illustrates that the signal processing device 170 of FIG. 10A receives Lidar data from a Lidar device (not shown), and performs vehicle detection-front, vehicle detection-back, pedestrian detection, curve detection, drivable space localization, road surface recognition, and the like based on the received Lidar data.

. Meanwhile, in the figure, it is illustrated that the plurality of neural processors 177a to 177c in the signal processing device 170 in FIG. 10A perform the above-described various detections, recognitions, or the like based on the camera data or the Lidar data, and in particular, continue to perform the above-mentioned various detections, awareness, or the like regardless of a vehicle traveling state.

. In other words, FIG. 10A illustrates that the plurality of neural processors 177a to 177c in the signal processing device 170 of FIG. 10A perform the above-described various detections, recognitions, and the like based on the camera data or the Lidar data regardless of a case where the vehicle is traveling at a low speed, traveling in a congested state, stopped, traveling on a highway, traveling at a high speed, or parked.

. Meanwhile, when the plurality of neural processors 177a to 177c in the signal processing device 170 of FIG. 10A operate at a fixed frame rate regardless of the vehicle traveling state such as the vehicle speed, there is a disadvantage that a processing load of the plurality of neural processes 177a to 177c is considerable. Furthermore, due to the processing load of the plurality of neural processors 177a to 177c, there is a disadvantage that power consumption is significant.

. FIG. 10C illustrates an example of an operating method of the signal processing device of FIG. 10A.

. Referring to the figure, the first virtual machine 520 may initialize a learning model according to the execution of the first application 539 in the second virtual machine 530 (S1010).

. For example, the first virtual machine 520 may be configured to control a learning model loaded to at least one of the neural processors 177a to 177c to be initialized according to the execution of the first application 539 in the second virtual machine 530.

. Next, the first virtual machine 520 may load the stored learning model (S1012).

. For example, the first virtual machine 520 may receive a file related to the learning model stored in the shared memory 508 and store the received file related to the learning model in an internal memory of at least one of the neural processors 177a to 177c.

. Next, the first virtual machine 520 may collect camera data or sensor data for the first application (S1014).

. For example, the first virtual machine 520 may collect camera data from a camera, sensor data from a sensor device, for the first application.

. Next, the first virtual machine 520 may transmit a first inference request for the first application to at least one of the neural processors 177a to 177c (S1018), transmit the camera data or the sensor data to at least one of the neural processors 177a to 177c, and receive a first inference result from the at least one of the neural processors 177a to 177c (S1018).

. Next, the first virtual machine 520 may initialize the learning model according to the execution of the second application 549 in the third virtual machine 540 (S1020).

. Next, the first virtual machine 520 may load the stored learning model (S1022).

. Next, the first virtual machine 520 may collect the camera data or the sensor data for the second application (S1024).

. Next, the first virtual machine 520 may transmit a second inference request for the second application to at least one of the neural processors 177a to 177c (S1028), transmit the camera data or the sensor data to at least one of the neural processors 177a to 177c, and receive a second inference result from at least one of the neural processors 177a to 177c (S1028).

. On the other hand, until a start of step 1020 (S1020), a time of Px is taken, and an operation for the second application is started after the time of Px.

. In addition, there is a disadvantage in that it takes a time of Py from step 1018 (S1018) to completion of step 1028 (S1028).

. According to such a scheme, when a plurality of operation requests are received from the plurality of applications 539 and 549 at the same time, the plurality of operation requests are generally processed one by one in the order of first input first output (FIFO), resulting in a delay problem in that subsequent operation requests have to wait until a preceding operation ends.

. Accordingly, the present disclosure proposes a method for efficiently operating a neural processor. This is described with reference to FIG. 11 and the following.

. FIG. 11 is a view showing an example of a system driven in a signal processing device according to an embodiment of the present disclosure.

. Referring to the figure, the signal processing device 170 according to the embodiment of the present disclosure includes a central processor 175, and at least one of the neural processors 177a to 177c.

. Meanwhile, the signal processing device 170 according to the embodiment of the present disclosure may further include a graphic processor 178.

. Meanwhile, the central processor 175 according to the embodiment of the present disclosure executes the hypervisor 505.

. Meanwhile, the system 1100 driven by the signal processing device 170 according to the embodiment of the present disclosure executes the plurality of virtual machines 520 to 540 on the hypervisor 505.

. Specifically, the central processor 175 in the signal processing device 170 according to the embodiment of the present disclosure executes the hypervisor 505, and executes the plurality of virtual machines 520 to 540 on the hypervisor 505.

. Meanwhile, the signal processing device 170 according to an embodiment of the present disclosure may further include a shared memory 508.

. The figure illustrates that the hypervisor 505 is executed in the central processor 175 and the shared memory 508 is executed in the hypervisor 504.

. Meanwhile, the signal processing device 170 according to the embodiment of the present disclosure may receive data from the camera 195, the sensor device 700, the transceiver 120, or a Lidar device (not shown) and perform signal processing by using the central processor 175, the graphic processor 178, and at least one of the plurality of neural processors 177a to 177c.

. Meanwhile, the sensor device 700 may continuously output sensor data to the signal processing device 170 during vehicle operation.

. The sensor data at this time may include, as data from the sensor devices 700 of various vehicles, at least one of vehicle direction data, vehicle position data (GPS data), vehicle angle data, vehicle speed data, vehicle acceleration data, vehicle inclination data, vehicle forward/reverse data, battery data, fuel data, tire data, vehicle lamp data, vehicle internal temperature data, and vehicle internal humidity data.

. Meanwhile, the camera 195 may continuously output the camera data to the signal processing device 170 during the vehicle operation.

. Meanwhile, the Lidar (not shown) may continuously output the Lidar data to the signal processing device 170 during the vehicle operation.

. Meanwhile, the neural processor 177 may detect an object based on the camera data and operate at a variable frame rate or output result data including the object based on the object.

. Meanwhile, the neural processor 177 may receive the camera data at a fixed frame rate, detect the object based on the camera data, and operate at the variable frame rate or output the result data including the object based on the object.

. Meanwhile, the first virtual machine 520, which is the server virtual machine among the plurality of virtual machines 520 to 540, controls the operation of the neural processor 177.

. Meanwhile, the second virtual machine 530 and the third virtual machine 540 that are the guest virtual machines among the plurality of virtual machines 520 to 540 may each execute an application.

. The figure illustrates that the second virtual machine 530 executes an advanced driver assistance system (ADAS) application (Nad), and the third virtual machine 540 executes a driver monitoring system (DMS) application (Ndm) and an augmented reality (AR) application (Nar) .

. In a state of sequentially receiving a request of a first operation, a request of a second operation, and a request of a third operation from a plurality of applications executed in at least one of the plurality of virtual machines 520 to 540, the first virtual machine 520 controls a first neural processor 177a to process the first operation and the third operation in parallel when the first operation and third operation are enabled to process in parallel. Accordingly, it is possible to efficiently operate the neural processor. Furthermore, power consumption may be reduced.

. Meanwhile, in response to operation layers being enabled to be shared at the time of the second operation and a fourth operation in a state of receiving a request of the fourth operation after the request of the third operation, the first virtual machine 520 may be configured to control the first neural processor 177a to successively process the second operation and the fourth operation after completion of the first operation and the third operation. Accordingly, it is possible to efficiently operate the neural processor.

. Meanwhile, at the time of requesting a plurality of operations from the plurality of applications, the first virtual machine 520 may be configured to control an arrangement of data for the plurality of operations in an internal memory 1620 in the first neural processor 177a to be varied. Accordingly, it is possible to efficiently operate the neural processor.

. Meanwhile, the first virtual machine 520 may execute a neural system service 1110 for controlling at least one of the neural processor 177a to 177c.

. Meanwhile, at the time of requesting the plurality of operations from the plurality of applications, the neural system service 1110 may be configured to control the arrangement of data for the plurality of operations in the internal memory 1620 in the first neural processor 177a to be varied. Accordingly, it is possible to efficiently operate the neural processor.

. Meanwhile, the neural system service 1110 may execute or include a neural manager 1113 for managing at least one of the neural processors 177a to 177c, a neural controller 1115 for determining or controlling an inference scheme of at least one of the neural processors 177a to 177c, and a neural interface 1118 for interfacing with at least one of the neural processors 177 a to 177c.

. Meanwhile, the neural system service 1110 may further execute or include a model container 509 that performs an interface of model parameters related to the operation of the neural processor 177 and version management of a learning file.

. The neural manager 1113 may be configured to perform artificial intelligence model management, learning model management, camera data management, sensor data management, or command queue management.

. The neural controller 1115 may determine an optimal inference scheme of the at least one of the neural processors 177a to 177c, perform queuing, partitioning, caching, or scalable coding, or control at least one of the neural processors 177a to 177c.

. The neural interface 1118 may execute an application program interface (API) related to an accelerator of at least one of the neural processors 177a to 177c.

. Meanwhile, the interface 522 in the first virtual machine 520 may be configured to perform interfacing between the neural system service 1110 and the model container 509 or the neural system service 1210 and the shared memory 508.

. Meanwhile, the interface 522 in the first virtual machine 520 may be configured to perform interfacing to the first virtual machine 520.

. Meanwhile, the interface 522 in the first virtual machine 520 may be configured to perform interfacing to the advanced driving assistance system application (Nad) executed in the second virtual machine 530 or the driver monitoring system application (Ndm) or the augmented reality application (Nar) executed in the third virtual machine 540.

. For example, the interface 522 in the first virtual machine 520 may be configured to control, using the shared memory 508, to transmit the camera data or sensor data or voice data to the neural processor 177.

. Meanwhile, the interface 522 in the first virtual machine 520 may be configured to control to transmit, to the neural system service 1110, result data output from the neural processor 177 and written to the shared memory 508.

. Meanwhile, the interface 522 in the first virtual machine 520 may be configured to control to transmit the result data output from the neural processor 177 and written to the shared memory 508 to the advanced driving assistance system application (Nad) executed in the second virtual machine 530 or the driver monitoring system application (Ndm) or the augmented reality application (Nar) executed in the third virtual machine 540.

. Meanwhile, the first virtual machine 520 may be executed based on a first operating system 620, the second virtual machine 530 may be executed based on a second operating system 630 having a high safety level, and the third virtual machine 540 may be executed based on a third operating system 640.

. That is, the plurality of virtual machines 520 to 540 may be executed based on different operating systems, respectively, or may be executed based on at least two operating systems.

. Meanwhile, the neural manager 1113 may manage a driving requirement of an artificial neural network based application, control neural network weight data, and process required input data.

. Meanwhile, the neural manager 1113 may sequentially process optimized command queues through a hardware accelerator and transmit operation results to the application.

. The driving requirement may include an operation priority, a dependency, and accuracy of the neural network. The operation priority refers to a relationship in which the first operation always needs to be prioritized over the second operation, or in a case of a safety-critical neural network, the first operation needs to be preceded by other candidate neural networks in the command queue, and is a preset value.

. Meanwhile, the neural network weight data may refer to a file in which element values for each matrix are structured and stored in a result inference process of the neural network calculated through a series of matrix operations.

. The neural network weight data may be prestored in the model container 509 in the neural system service 1110 through an API call of the neural system service 1110 during an application installation process.

. Meanwhile, default weight data loaded in the model container 509 may be automatically transformed and stored in a system initialization process at various levels of discretization. For example, if the default weight is defined as FP32, a total of four weight files may be stored by being sub-discretized into INT8, INT16, and FP16.

. The required input data may refer to input signals required for a current neural network to operate, such as a vehicle speed, a current position, a radar, a Lidar, a camera image, and intermediate to final operation result values of a preceding neural network.

. The input data may be transmitted in real time to the shared memory 508 in the hypervisor 505 via an interface operating through the central processor 175 in the server virtual machine.

. The command queue may define a series of orders for operation-processing the artificial neural network through the hardware accelerator with a memory buffer having a sequential FIFO data structure.

. A neural network operation request entering the command queue may be transmitted together with metadata such as an application name, a location of an application virtual machine, and a storage destination of an operation result, a hardware accelerator control setting value, a memory location of input data, and memory location information for each discretization level of weight data.

. The hardware accelerator control setting value may include a unique number of the hardware accelerator which is in charge of an operation, a current target discretization level (such as INT8, INT16, FP16, or FP32) of the weight data, and a target neural network weight position mapping table for each internal memory address of the hardware accelerator.

. Meanwhile, the neural controller 1115 may schedule an optimized command queue based on requested artificial neural network operation commands and an availability of a current hardware resource, and control an actual hardware accelerator to match an expected behavior of the command queue.

. The neural controller 1115 may receive a neural network drive requirement from the neural manager 1113 and optimize the command queue.

. In an optimization process, in other words, when the priority, dependency, and accuracy metadata for every slot of current command queue are checked, and various queue optimization techniques (partition, caching, accuracy Coding, etc.) are applied to all candidate commands in the current command queue as targets, hardware may be maximally used within a unit time, and a combination of directions in which a latency of individual operation requests is minimized may be operated through simulation scheduling.

. A weight file (learning model) MAY be requested from the neural manager 1113 based on the obtained optimal slot position and loaded into the internal memory of the hardware.

. If two different neural networks are managed as a virtual neural network by the partition among the optimization techniques and input as a hardware operation request, weight start and end positions of the first operation corresponding to an address number of the internal memory of the hardware may be recorded in the mapping table, and then weight start and the end positions of the second operation may be recorded in the mapping table.

. Accordingly, the hardware accelerator is equivalent to performing parallel processing of one virtual neural network, but the neural controller 1115 may separate the result of the operation into a result of the first operation and a result of the second operation through the mapping table and separately transmit the results to individual applications.

. After completing the initialization process, the neural controller 1115 may receive a request for sequential processing of the command queues from the neural manager 1113.

. At this time, the neural controller 1115 may be configured to control the neural manager 1113 to takeout input data prepared in advance from an input data queue, make a neural network weight and input data corresponding thereto into a pair, and perform operation processing through a hardware accelerator API.

. If the discretization level of the current neural network is changed according to a specific situation different from an initial driving requirement, the neural controller 1115 may be configured to perform a bit operation (bitwise concatenate) of concatenating a weight transform difference value (delta) of the hardware internal memory to a default weight of a current internal memory to transform the discretization level of the default weight of the internal memory in real time.

. FIG. 12 is an example of a flowchart showing an operating method of a signal processing device according to an embodiment of the present disclosure.

. Referring to the figure, the first virtual machine 520 in the signal processing device 170 according to the embodiment of the present disclosure may initialize a learning model according to the execution of a first application (Nad) in the second virtual machine 530 (S1110).

. Meanwhile, the first virtual machine 520 may initialize the learning model according to the execution of a second application (Ndm) in the third virtual machine 540 (S1111) .

. At this time, unlike FIG. 10C, step 1110 (S1110) and step 1111 (S1111) may be performed in parallel.

. Next, the first virtual machine 520 in the signal processing device 170 may confirm the initialization of the learning model (S1112).

. Meanwhile, the first virtual machine 520 may confirm the initialization of the learning model, and then load the learning model for the stored first application (Nad) .

. For example, the first virtual machine 520 may receive a file related to the learning model for the first application (Nad) stored in the shared memory 508 and control the received file related to the learning model to be stored in an internal memory of at least one of the neural processors 177a to 177c.

. Next, the first virtual machine 520 may transmit a first inference request for the first application (Nad) to at least one of the neural processors 177a to 177c (S1118), transmit the camera data or the sensor data to at least one of the neural processors 177a to 177c, and receive a first inference result from at least one of the neural processors 177a to 177c (S1118).

. Meanwhile, the first virtual machine 520 in the signal processing device 170 may confirm the initialization of the learning model (S1113).

. Meanwhile, the first virtual machine 520 may confirm the initialization of the learning model, and then load the learning model for the stored second application (Ndm) .

. For example, the first virtual machine 520 may receive a file related to the learning model for the second application (Ndm) stored in the shared memory 508 and store the received file related to the learning model in the internal memory of at least one of the neural processors 177a to 177c.

. Next, the first virtual machine 520 may transmit a second inference request for the second application (Ndm) to at least one of the neural processors 177a to 177c (S1117), transmit the camera data or the sensor data to at least one of the neural processors 177a to 177c, and receive a second inference result from at least one of the neural processors 177a to 177c (S1119).

. Meanwhile, unlike FIG. 10C, step 1112 (S1112), step 1116 (S1116), step 1118 (S1118), step 1113 (S1113), step 1117 (S1117), and step 1119 (S1119) may be performed in parallel.

. As described above, a behavior for the first application (Nad) and a behavior for the second application (Ndm) are simultaneously processed in parallel to significantly reduce an execution time of a plurality of applications.

. In particular, since the plurality of applications may be executed in parallel in at least one of the neural processors 177a to 177c, the neural processors 177a to 177c may be operated efficiently.

. FIGS. 13A to 25B are views referred to in the description of FIG. 11 or 12.

. FIG. 13A is a view showing a plurality of operations according to execution of a plurality of applications.

. Referring to the figure, a first operation 1302 may correspond to a lane recognition operation in an augmented reality application (Nar), a second operation 1304 may correspond to a face recognition operation in a driver monitoring system application (Ndm), and a third operation 1306 may correspond to an object recognition operation in an advanced driving assistance system application (Nad).

. Since an operation amount of the first operation 1302 is smaller than that of the second operation 1304, a size SZa of the first operation 1302 is illustrated as being smaller than a size SZb of the second operation 1304 in the figure.

. Since the operation amount of the second operation 1302 is smaller than that of the third operation 1304, the size SZb of the second operation 1304 is illustrated as being smaller than a size SZc of the third operation 1306 in the figure.

. Meanwhile, a plurality of operations according to execution of a plurality of applications are performed in the first neural processor 177a, and for efficient operation performance, it is necessary that the plurality of operations are cached in a technique optimized for an internal memory of the first neural processor 177a.

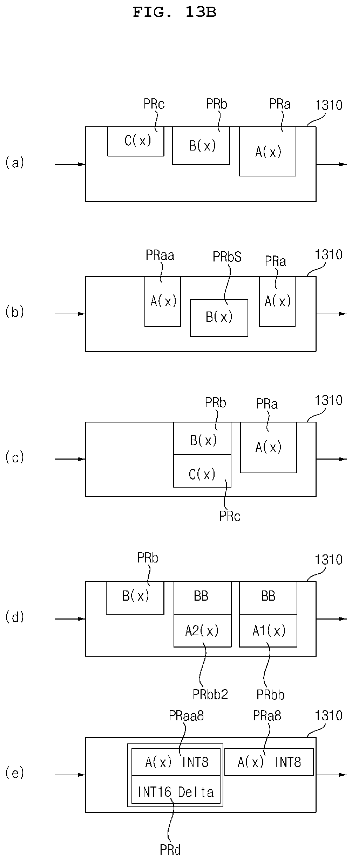

. FIG. 13B is a view showing various examples of caching for the plurality of operations.

. Referring to the figure, (a) ofFIG. 13B shows a sequential arrangement of a first operation PRa, a second operation PRb, and a third operation PRc as inference queuing.

. (b) of FIG. 13B shows a sequential arrangement of the first operation PRa, a second operation PRSb, and a first operation PRaa as preemption.

. (c) of FIG. 13B shows a parallel arrangement of the second operation PRb and the third operation PRc after the first operation PRa as partitioning.

. (d) of FIG. 13B shows, as shared backbone caching, a parallel arrangement of a BB operation and an A1 operation PRbb, a parallel arrangement of the BB operation and an A2 operation PRbb2, and an arrangement of the B operation PRb.

. (e) of FIG. 13B shows, as scalable accuracy coding, a parallel arrangement of an 8-bit based A operation PRaa8 and a difference operation PRd after the 8-bit based A operation PRa8.

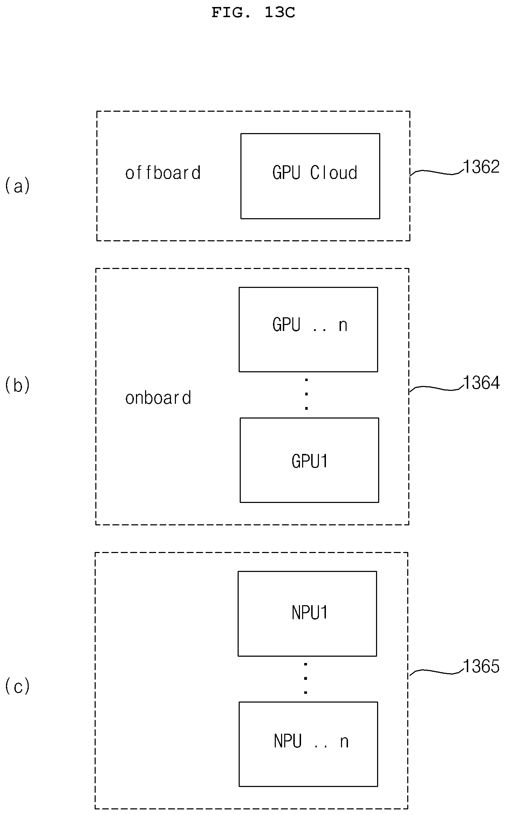

. FIG. 13C is a view showing a processor in which a plurality of operations are performed.

. Referring to the figure, some of the plurality of operations in FIG. 13Band the like may be performed by a graphic processor 1362 in a cloud server, another some may be performed by a plurality of graphic processors 1364 in the signal processing device 170, and other some may be executed by a plurality of neural processors 1365 in the signal processing device 170.

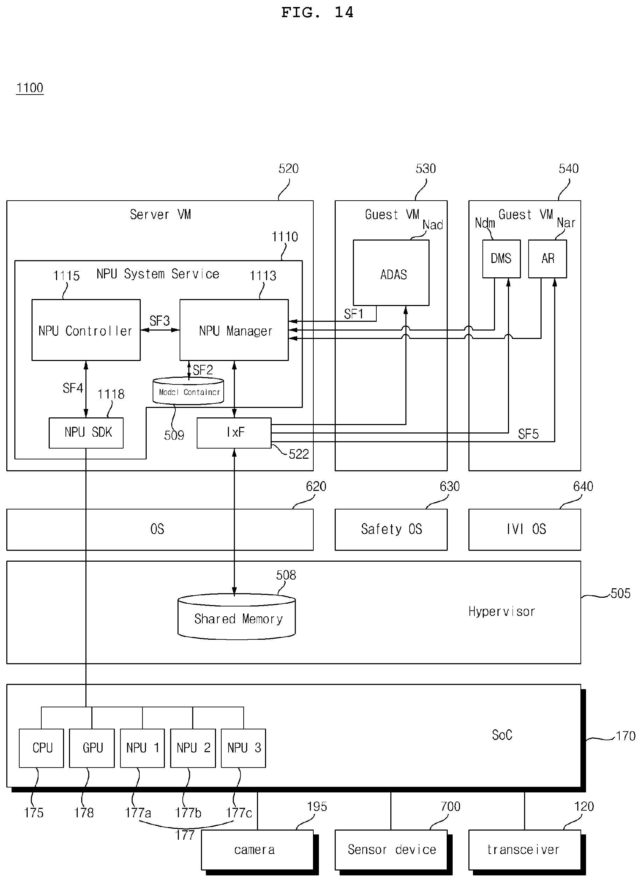

. FIG. 14 is a view referred to in the description of an operation when the advanced driving assistance system application (Nad) and the augmented reality application (Nar) in FIG. 11 are executed.

. Referring to the figure, a first application Nad executed in the second virtual machine 530 in the central processor 175 may request a hardware acceleration operation by utilizing an API of the neural system service 1110 in the first virtual machine 520 (SF1).

. Meanwhile, a second application Nar executed in the third virtual machine 540 in the central processor 175 may request the hardware acceleration operation by utilizing the API of the neural system service 1110 in the first virtual machine 520.

. Meanwhile, the neural manager 1113 in the first virtual machine 520 may confirm driving requirements of the requested first application (Nad) and second application (Nar), and then receive required weight files from the model container 509, and process various candidate discretization processes (SF2).

. Meanwhile, the neural manager 1113 in the first virtual machine 520 may request, through the neural controller 1115, optimization of a current command queue and the requested command of the first operation of the first application (Nad) and the command of the second operation of the second application (Nar).

. Meanwhile, the neural controller 1115 in the first virtual machine 520 may determine an optimal slot placement through simulation scheduling of all slots of an existing command queue, a new command of the first operation, and a new command of the second operation (SF3).

. For example, when input image data of the first application Nad and the second application Nar are the same front camera data, and the first operation of the first application is higher in priority than the second operation of the second application and thus needs to be executed first, the first virtual machine 520 may store an operation intermediate result of a backbone layer of a first neural network for performing the first operation in the internal memory, and recycle a backbone-layer operation intermediate result of the first neural network in operation processing of a second neural network for the second operation, so as to arrange the command queue to remove a redundant operation.

. As another example, the first virtual machine 520 may decrease a discretization level of the second operation from a first level to a second level when a current driving route is a sparsely populated country road, an electric vehicle operates in an energy saving mode due to lack of a remaining battery, or no object is detected for a predetermined time based on a result of the first operation.

. Specifically, the first virtual machine 520 may be configured to control the discretization level of the second operation to be lowered from a 16-bit integer operation INT16 which is the first level to an 8-bit integer operation INT8 which is the second level. Accordingly, operation accuracy is lowered, and thus power consumption may be reduced.

. Meanwhile, when an initialization process of the neural manager 1113 is completed, the first virtual machine 520 may receive input data (for example, camera data, sensor data, or audio data) in real time through the interface 522, and load the input data into input queues of the neural processors 177a to 177c and the like, and the neural controller 1115 sequentially read the input data loaded into the neural processors 177a to 177c and the like and perform the hardware acceleration operation through the neural interface 1118 (SF4).

. Meanwhile, when the neural processors 177a to 177c and the like complete an operation on one input pair, the neural manager 1113 may read operation result data from the internal memory in the neural processors 177a to 177c and transmit the operation result data to the first application Nad in the second virtual machine 530 and the second application Nar in the third virtual machine 540 via the interface 522 (SF5).

. Meanwhile, when it is confirmed through the neural interface 1118 that a hardware error occurs in a process of initializing neural processor hardware through the neural controller 1115, the neural processors 177a to 177c are currently unable to perform the requested neural network operation, and thus the neural manager 1113 may confirm whether another hardware accelerator supported by the signal processing device 170 is available.

. For example, in a case where initialization of the neural processors 177a to 177c is attempted for an AR operation and target neural processor 177a to 177c respond to a no-response or no-initialization message, the neural manager 1113 may sequentially attempt initialization of a plurality of other hardware accelerators supported by the signal processing device 170.

. Then, when there is an available resource among the plurality of other hardware accelerators in the signal processing device 170, the neural network manager 1113 may be configured to change a current driving requirement of the neural network to a corresponding hardware resource usage.

. Here, a range of the change may include changing an ID of a target hardware accelerator, and setting a default weight file of the neural network to a quantization level supported by the target hardware accelerator.

. Meanwhile, when a situation occurs in which all hardware accelerators in the signal processing device 170 may not be used, the neural manager 1113 may be configured to perform a simulation to determine whether a currently requested neural network operation is processable on the central processor 175.

. Here, the simulation may be operated based on computed based on a consumption time per single operation in the current central processor 175, taking into account both a size of a weight and the total number of operations and a required maximum processing time.

. Meanwhile, when the total number of weight operations may not achieve a target frame per second (FPS) with only a processing capability of the central processor 175 of the signal processing device 170 in a neural network in which a layer depth of the artificial neural network is extremely deep, the neural manager 1113 may optimize the command queue by prioritizing parallel processing operations through hardware accelerators such as the neural processors 177a to 177c.

. For example, the neural manager 1113 may not design a menu that is frequently used, an air conditioner setting that is frequently set, or the like with a deep artificial neural network, and may use an application that uses a simple pattern recognizer with a relatively small operation amount, such as a support vector machine (SVM), or the like, and the neural system service 1110 may preferentially set the central processor 175 instead of the neural processors 177a to 177c when optimizing the command queue.

. Meanwhile, for applications where a complexity of the artificial neural network and a set of neural network commands used are in a range that is not effectively supported by the neural processors 177a to 177c, the neural manager 1113 may consider candidate hardware accelerators when optimizing command queues to preferentially assign modules that are supported by general purpose parallelism functions, such as the graphic processor 178.

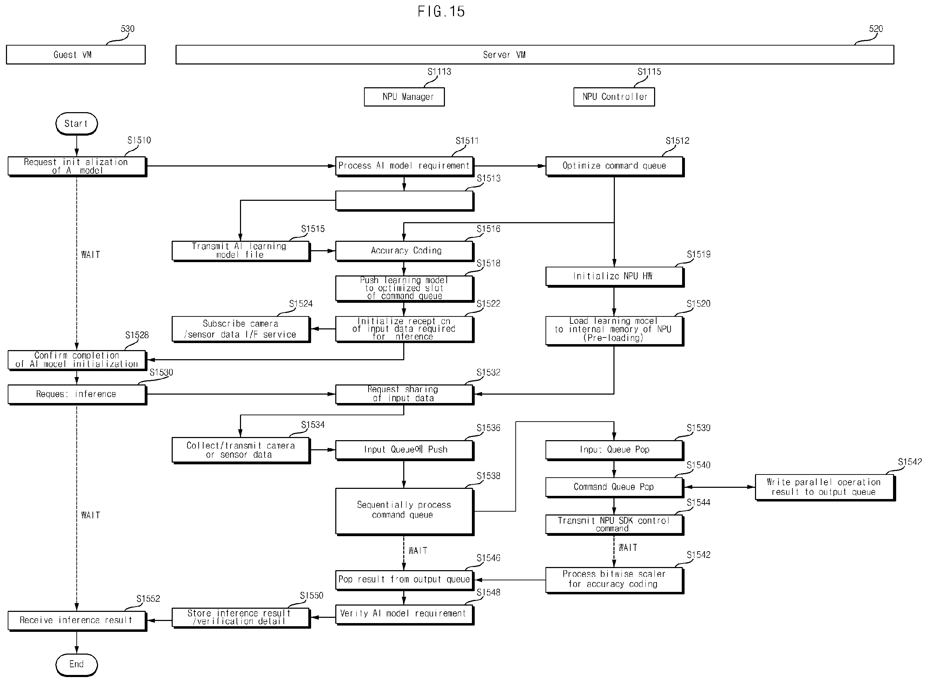

. FIG. 15 is a flowchart showing the operation of FIG. 14.

. Referring to the figure, the second virtual machine 530 may request the first virtual machine 520 to initialize the learning model according to the execution of the first application Nad in the second virtual machine 530 (S1510) .

. Next, the figure, the neural manager 1113 in the first virtual machine 520 may be configured to control the learning model to be initialized based on a learning model initialization request of the first application Nad in the second virtual machine 530 (S1511).

. Meanwhile, the neural manager 1113 in the first virtual machine 520 may transmit a command queue optimization request to the neural controller 1115 (S1512).

. Next, the neural manager 1113 in the first virtual machine 520 may request, via the model container 509 or the neural interface 1118, learning model data (S1511).

. Correspondingly, the model container 509 or the neural interface 1118 may transmit, to the neural manager 1113, the learning model data stored in the model container 508 or the learning model data stored in the shared memory 505 (S1515).

. Meanwhile, the neural manager 1113 in the first virtual machine 520 may be configured to perform accuracy coding when necessary, based on the received stored learning module data (S1516).

. Next, the neural manager 1113 in the first virtual machine 520 may transmit the learning model data to an optimized slot of the command queue (S1518).

. Meanwhile, the neural controller 1115 in the first virtual machine 520 may be configured to control the neural processor 177 to be initialized (S1519).

. Next, the neural controller 1115 in the first virtual machine 520 may be configured to control the learning model data to be loaded to the internal memory of the neural processor 177 (S1520). Such a step may also be called preloading.

. Next, the neural manager 1113 in the first virtual machine 520 may initialize reception of input data required for inference (S1522).

. In addition, the neural interface 1118 in the first virtual machine 520 may request transmission or subscription of camera data or sensor data or voice data, which is an example of input data, to the sensor device 700, the camera 195, the shared memory 508, or the like (S1524).

. Meanwhile, the second virtual machine 530 may confirm completion of the learning model initialization (S1528), and may request inference after the initialization completion confirmation (S1530).

. Correspondingly, the neural manager 1113 in the first virtual machine 520 may receive the inference request and transmit a request for sharing the input data to the neural interface 1118 (S1532).

. Next, the neural interface 1118 in the first virtual machine 520 may collect the camera data or the sensor data or the voice data, which is an example of the input data, from the sensor device 700, the camera 195, the shared memory 508, or the like, and transmit the collected data (S1534).

. Next, the neural manage 1113 in the first virtual machine 520 may transmit the received input data to an input queue (S1536), and control the input data to be arranged and processed in the command queue (S1538).

. Next, the neural controller 1115 in the first virtual machine 520 may be configured to control the input queue to be loaded to the internal memory of the neural processor 177 (S1539), and control the command queue to be loaded to the internal memory of the neural processor 177.

. At this time, processing a bitwise scaler for accuracy coding may be performed (S1542).

. Next, the neural controller 1115 in the first virtual machine 520 may transmit a control command to the neural processor 177 (S1544).

. Next, the neural processor 177 may receive an operation result for the inference, and control inference result data to be loaded to the internal memory of the neural processor 174 through the output queue (S1545).

. Next, the neural manager 1113 in the first virtual machine 520 may receive the inference result data through the output queue (S1546), and verify the learning model requirement (S1548).

. Next, the neural interface 1118 in the first virtual machine 520 may store the inference result data and verification detail data in the shared memory 508 (S1550).

. Next, the first application Nad in the second virtual machine 530 may receive the inference result data through the shared memory 508 (S1552).

. According to such a scheme, an inference request from one application may be quickly processed.

. Furthermore, since a plurality of inference requests of a plurality of applications may be performed through the parallel operation, the neural processor 177 and the like may be efficiently operated.

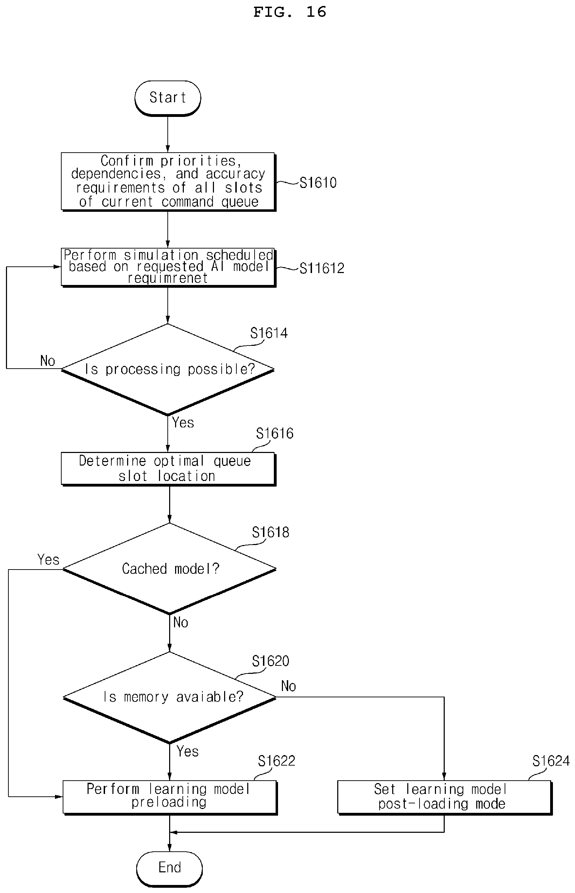

. FIG. 16 is a flowchart showing optimization of the command queue.

. Referring to the figure, the neural manager 1113 in the first virtual machine 520 may confirm priorities, dependencies, and accuracy requirements of all slots or all operations in a current command queue (S1610).

. Next, the neural controller 1113 in the first virtual machine 520 may be configured to perform simulation scheduling based on a requirement of the learning model which is requested (S1612).

. Next, the neural manager 1113 in the first virtual machine 520 may determine an optimal queue slot position or an optimal queue operation position (S1616) in a case of a slot or operation that is processable based on the simulation scheduling (S1614).

. Meanwhile, the neural manager 1113 in the first virtual machine 520 may determine whether the learning model is an already cached model (S1618), determine, when the learning model is not the already cached model, whether the learning model data is enabled to be loaded to a remaining internal memory of the neural processor 177 (S1620), and control, when the learning model is the already cached model, the learning model data to be loaded in advance (S1622).

. Meanwhile, in step 1620 (S1620), when the learning model is not the already cached model, the learning model data may be controlled to be loaded in step 1546 (S1546) in FIG. 15 (S1624). Such a step may also be called post-loading.

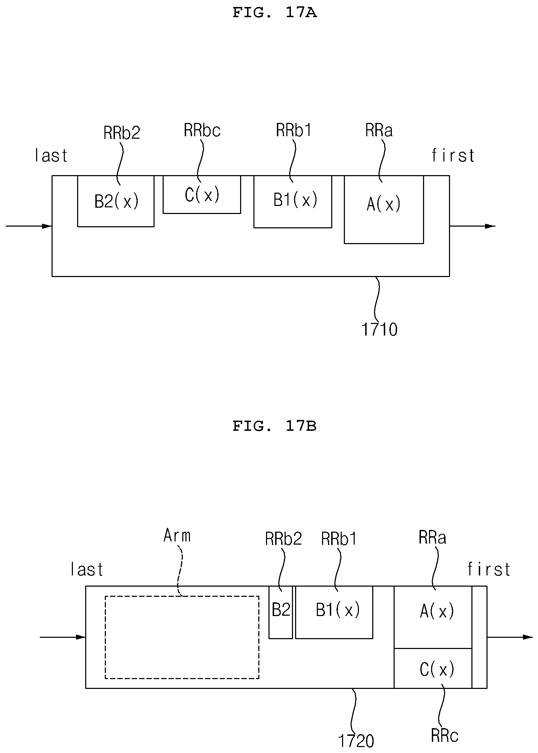

. FIGS. 17A and 17B illustrate various examples of queuing.

. FIG. 17A is a view showing sequential queuing.

. Referring to the figure, the first virtual machine 520 may receive, from a plurality of applications executed on at least one of the plurality of virtual machines 520 to 540, requests of a plurality of operations RRa, RRb1, RRbc, and RRb2.

. Meanwhile, as shown in the figure, the first virtual machine 520 may be configured to control the plurality of operations RRa, RRb1, RRbc, and RRb2 to be sequentially arranged in the internal memory 1710 in the first neural processor 177a.

. According to a sequential operation scheme according to the sequential arrangement, there is a disadvantage in that the first neural processor 177a may not be operated efficiently, and thus it takes a considerable amount of time until the plurality of operations RRa, RRb1, RRbc, and RRb2 are completed.

. FIG. 17B is a view showing an example of optimization queuing.

. Referring to the figure, the first virtual machine 520 may receive, from the plurality of applications executed on at least one of the plurality of virtual machines 520 to 540, requests of the plurality of operations RRa, RRb1, RRbc, and RRb2.

. Meanwhile, as shown in the figure, in a state of sequentially receiving a request of a first operation RRa, a request of a second operation RRb1, and a request of a third operation RRbc, the first virtual machine 520 controls the first operation RRa and the third operation RRbc to process in parallel when the first operation RRa and the third operation RRbc are enabled to process in parallel, and controls the second operation RRb1 to process after completion of the first operation RRa and the third operation RRbc.

. That is, the first virtual machine 520 may place the first operation RRa and the third operation RRbc in parallel in the internal memory 1710 in the first neural processor 177a, and place the second operation RRb1 after the first operation RRa and the third operation RRbc. Accordingly, it is possible to efficiently operate the neural processor.

. Meanwhile, the request of the first operation RRa may be an operation request of the ADAS application, and the request of the third operation RRbc may be an operation request of the AR application.

. For example, when the first operation RRa has a highest priority, an entire operation may be completed by using only 70% of a hardware capacity, and in the third operation RRbc, the entire operation may be completed by using only 30% of the hardware capacity; the first virtual machine 520 may virtually integrate the first operation RRa and the third operation RRbc like one neural network to make an operation request to the hardware. Accordingly, it is possible to efficiently operate the neural processor.

. Meanwhile, in response to operation layers being enabled to be shared at the time of the second operation RRb1 and the fourth operation RRb2 in a state of receiving a request of the fourth operation RRB2 after the request of the third operation RRbc, the first virtual machine 520 may be configured to control the first neural processor 177a to successively process the second operation RRb1 and the fourth operation RRb2 after completion of the first operation RRa and the third operation RRbc.

. That is, the first virtual machine 520 may place the first operation RRa and the third operation RRbc in parallel in the internal memory 1710 in the first neural processor 177a, and successively place the second operation RRb1 and the fourth operation RRb2 after the first operation RRa and the third operation RRbc. Accordingly, it is possible to efficiently operate the neural processor.

. Meanwhile, the request of the second operation RRb1 may be a request for a voice operation for driver monitoring, and the request of the fourth operation RRb2 may be a request of a camera data-based behavior sensing operation for driver monitoring.

. For example, when the driver looks at an air conditioning control menu on a vehicle display and utters a voice command of "lower the temperature", the first neural processor 177a may keep an intermediate operation result for feature point information in a voice signal in the internal memory in the first neural processor 177a through the second operation RRb1, and then provide a feature point vector information of the voice signal through the fourth operation RRb2 to detect, from the camera data, whether a line of sight of the driver is actually focused on the air conditioning control menu.

. Therefore, since a detection target at the time of the fourth operation RRb2 is constraint to an air conditioning control-related pattern instead of all behavior patterns of the driver, the operation amount may be reduced. Accordingly, it is possible to efficiently operate the neural processor.

. Meanwhile, in the figure, by the above-described optimization queuing technique, a free space such as Arm may be secured in the internal memory 1710 in the first neural processor 177a, and additional operations may be performed through the free space Arm. Accordingly, it is possible to efficiently operate the neural processor. Furthermore, power consumption may be reduced.

. Meanwhile, the first virtual machine 520 may be configured to control a discretization level of the second operation RRb1 to be lowered from a first level to a second level in the case of an energy saving mode or in response to no object being detected for a predetermined time based on a result of the first operation RRa. Accordingly, it is possible to efficiently operate the neural processor. Furthermore, power consumption may be reduced.

. Meanwhile, in respect to FIG. 17B, the first virtual machine 520 may be configured to control the first neural processor 177a to perform the first operation to the third operation RRa, RRb1, and RRbc when the central processor 175 is unable to perform the first operation to the third operation RRa, RRb1, and RRbc. Accordingly, it is possible to efficiently operate the neural processor.

. Meanwhile, the first virtual machine 520 may be configured to perform the first operation to the third operation RRa, RRb1, and RRbc in the central processor 175, and the first virtual machine 520 may be configured to control the first operation RRa and the third operation RRbc to process in parallel when the first operation RRa and the third operation RRbc are enabled to process in parallel, and control the second operation RRb1 to process after completion of the first operation RRa and the third operations RRbc. Accordingly, it is possible to efficiently operate the neural processor.

. Meanwhile, when the second operation RRb1 includes an audio data-based behavior recognition operation from a microphone and the fourth operation RRb2 includes a camera data-based gaze recognition operation, the first virtual machine 520 may be configured to control result data of the second operation RRb1 to be stored in the internal memory 1620 in the first neural processor 177a, and control the fourth operation RRb2 to process by using at least a part of the result data stored in the internal memory 1620. Accordingly, it is possible to efficiently operate the neural processor.

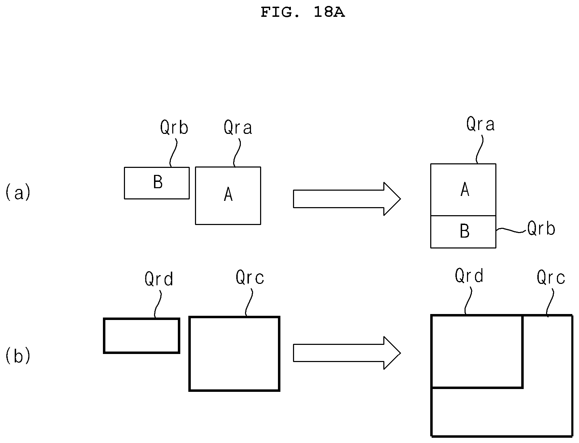

. FIG. 18A is a view showing various arrangements of the first operation and the second operation in FIG. 17B.

. Referring to the figure, (a) of FIG. 18A illustrates an example of an arrangement of a first operation Qra and a third operation Qrb based on the command queue.

. Meanwhile, the first virtual machine 520 may be configured to control the first operation Qra and the third operation Qrb to be arranged in parallel in a one-dimensional direction.

. Accordingly, the first neural processor 177a may be configured to perform a parallel operation for the first operation Qra and the third operation Qrb in the one-dimensional direction.

. (b) of FIG. 18A illustrates an example of an arrangement of a first operation Qrc and the third operation Qrd in the internal memory 1720 in the first neural processor 177a.

. Meanwhile, the first virtual machine 520 may be configured to control the first operation Qrc and the third operation Qrd to be arranged in parallel in a two-dimensional direction in the internal memory 1720 in the first neural processor 177a.

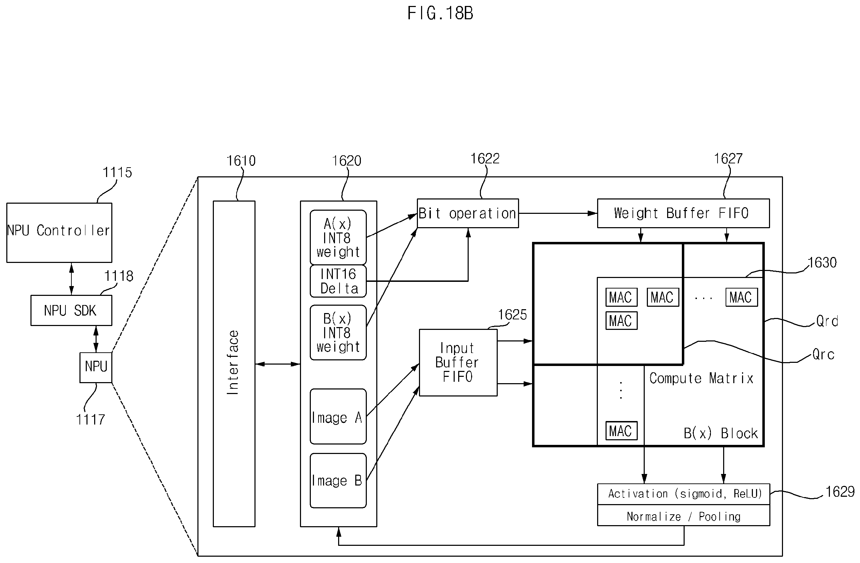

. Accordingly, an operator (1630 in FIG. 18B) in the first neural processor 177a may be configured to perform any one (e.g., the first operation Qrc) of the first operation Qrc and the third operation Qrd in a first region and perform the other operation (e.g., the third operation Qrd) in a second region surrounding the first region.

. FIG. 18B is a view showing an internal block diagram of the neural processor.

. Referring to the figure, the neural processor 1117 may be controlled by the neural controller 1115 and the neural interface 1118 in the first virtual machine 520.

. Meanwhile, the neural processor 1117 may include an internal memory 1620 that stores weight data or input data, and an operator 1630 that performs an operation based on data from the internal memory 1620.

. Meanwhile, the neural processor 1117 may further include an interface 1610 that exchanges data with the neural interface 1118, a bit operator 1622 that outputs a quantization weight, an input buffer 1625, a weight buffer 1627, and an output buffer 1629.

. The internal memory 1620 may store 8-bit integer weight data (INT8 weight), 16-bit difference data (INT16 delta), or image data.

. The bit operator 1622 may output weight data of a first length or weight data of a second length based on quantization mode information from the neural controller 1115.

. For example, the bit operator 1622 may output weight data of a first length based on first quantization mode information from the neural controller 1115 or weight data of a second length based on second quantization mode information.

. Specifically, the bit operator 1622 may output 8-bit integer weight data based on the first quantization mode information, or output 16-bit integer weight data based on the 8-bit integer weight data and the 16-bit difference data based on the second quantization mode data.

. The weight buffer 1627 may be configured to perform memory address mapping based on the weight data from the bit operator 1622.

. Meanwhile, the operator 1630 may include a plurality of parallel operation processing blocks.

. For example, the operator 1630 may be configured to perform any one (e.g., the first operation Qrc) of the first operation Qrc and the third operation Qrd in (b) of FIG. 18Ain an operation processing block corresponding to the first region, and perform the other one (e.g., the third operation Qrd) in an operation process block corresponding to the second region surrounding the first region.

. For example, when the first operation Qrc and the third operation Qrd in (b) of FIG. 18A may be integrated into one virtual neural network and simultaneously performed as parallel processing operations, the neural controller 1115 may confirm, based on a partition technique, weight start and end positions of the first operation Qrc and the third operation Qrd in the hardware internal memory 1620 through the neural interface 1118.

. Meanwhile, the neural controller 1115 may confirm an address of the internal memory 1620 in which the input data of the first operation Qrc and the third operation Qrd is present.

. Meanwhile, the neural controller 1115 may separately input the first operation Qrc and the third operation Qrd to the input of the parallel operation processing block at a pin array level in accordance with the mapping table.

. Meanwhile, the neural controller 1115 may also similarly separate results of the first operation Qrc and the third operation Qrd into the results of the first operation Qrc and the third operation Qrd.

. Meanwhile, the first neural processor 177a may be configured to perform at least one of the first operation to the third operation RRa, RRb1, and RRbc based on the input data of the first length according to a first quantization mode, as illustrated in FIG. 17B, and perform at least one of the first operation to the third operation RRa, RRb1, and RRbc based on the input data of the second length longer than the first length according to a second quantization mode. Accordingly, it is possible to efficiently operate the neural processor. Furthermore, power consumption may be reduced.

. Meanwhile, the first neural processor 177a may be configured to perform at least one of the first operation to the third operation RRa, RRb1, and RRbc based on the input data of the first length according to the first quantization mode, as illustrated in FIG. 17B, and perform a concatenate operation based on the input data of the first length, and difference data corresponding to the input data of the first length, generate the input data of the second length longer than the first length based on the concatenate operation, and perform at least one of the first operation to the third operation RRa, RRb1, and RRbc based on the input data of the second length longer than the first length based on the second quantization mode. Accordingly, it is possible to efficiently operate the neural processor. Furthermore, power consumption may be reduced.

. The input data of the first length at this time may be 8-bit integer data, the input data of the second length may be 16-bit integer data, and the concatenate operation may be a concatenate operation.

. Meanwhile, the first neural processor 177a may be configured to perform at least one of the first operation to the third operation RRa, RRb1, and RRbc based on the second quantization mode as illustrated in FIG. 17B, and then switch to the first quantization mode in response to the number of feature points of a detection object being equal to or less than a predetermined value based on result data of at least one of the first operation to the third operation RRa, RRb1, and RRbc. Accordingly, it is possible to efficiently operate the neural processor. Furthermore, power consumption may be reduced.

. Meanwhile, the first neural processor 177a may be configured to perform at least one of the first operation to the third operation RRa, RRb1, and RRbc based on the first quantization mode or a daytime mode during daytime traveling of the vehicle, as illustrated in FIG. 17B, and perform at least one of the first operation to the third operation RRa, RRb1, and RRbc based on the second quantization mode or a night time mode during night time traveling of the vehicle. Accordingly, it is possible to efficiently operate the neural processor. Furthermore, power consumption may be reduced.

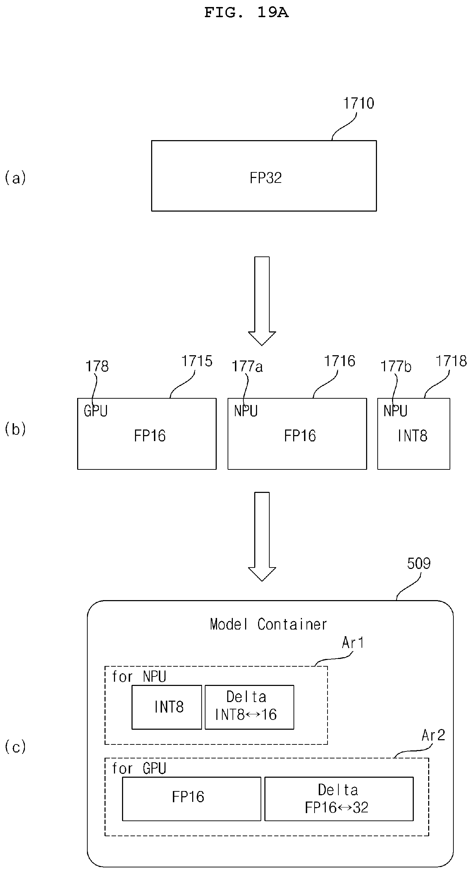

. FIGS. 19A to 19E are views referred to in the description of the quantization mode.

. FIG. 19A is a view showing generation and storage of a quantization weight.

. Referring to the figure, a weight original file 1710 of the neural network may be defined as a 32-bit floating point (FP32) version that is not subjected to quantization, as shown in (a) of FIG. 19A.

. For example, the learned neural network weight may be output as a 32-bit floating point FP32.

. Meanwhile, an application executed in the virtual machine may transmit the weight original file 170 to the model container 509 through an API of the neural system service 1110.

. Meanwhile, the neural manager 1113 may quantize an original weight with precision supported by various hardware accelerators supported by the signal processing device 170, as shown in (b) of FIG. 19A, with respect to an original weight file transferred to the model container 509.

. For example, the first neural processor 177a may support a 16-bit floating point 1716, the second neural processor 177b may support an 8-bit integer 1718, and the graphic processor 178 may support a 16-bit floating point 1715.

. As another example, the neural processor 177 may support INT8 and INT16, and the graphic processor 178 may support FP16 and FP32.

. Meanwhile, the neural manager 1113 may calculate difference data between quantized weight data to obtain a data value required for transformation from a lower stage to an upper stage.

. For example, difference bits between upper 16-bit integers INT8 in a lower 8-bit integer INT8 pattern may be defined as difference data.

. Here, the difference data (delta) may include not only a role of varying precision, but also a learning condition of an input image, such as a condition at the time of learning the input image, that is, difference data of model weights learned for a daytime image and difference data of model weighs learned for a night time image.

. Meanwhile, after calculating both the floating point and the difference data value for each integer type, the lower quantization weight serving as a reference for each numerical value type and the difference data required for transformation to an upper value may be stored in one pair in the model container 509.

. For example, as shown in (c) of FIG. 19A, the model container 509 may store weight data of an 8-bit integer INT8 and difference data for 16-bit switching (INT8 → 16) in one pair Ar1.

. As another example, as shown in (c) of FIG. 19A, the model container 509 may store weight data of a 16-bit floating point FP16 and difference data for 32-bit switching (FP16 → 32) in one pair Ar2.

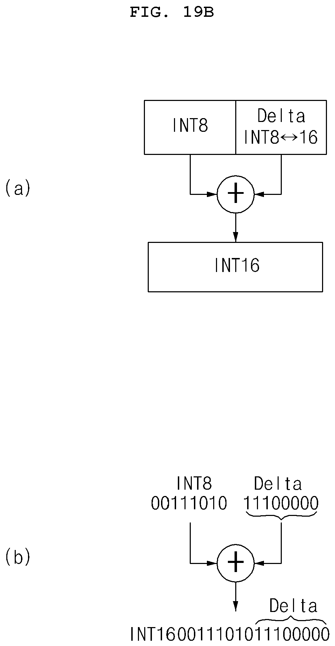

. FIG. 19B is a view showing quantization transform.

. Referring to the figure, as shown in (a) of FIG. 19B, when one pair stored in the model container 509 includes, for example, the weight data of the 8-bit integer INT8 and difference data corresponding thereto, precision transformation from the 8-bit integer to the 16-bit integer may generate 16-bit integer data by concatenating 8-bit difference data with 8-bit integer data.

. Such a concatenation operation may be generally referred to as a concatenate operation.

. (b) of FIG. 19B illustrates that 16-bit integer data of '0011101011100000' is generated by a concatenation operation of '0011 1010', which is 8-bit integer INT8 data, and '11100000', which is 8-bit difference data.

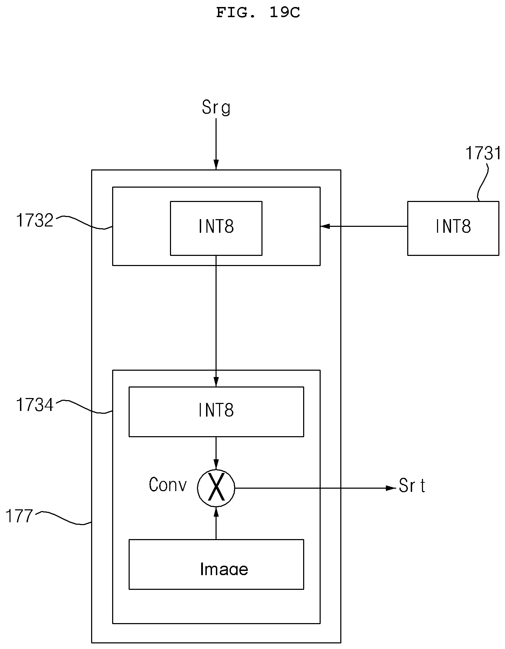

. FIG. 19C illustrates quantization transform related to the present disclosure.

. Referring to the figure, when 8-bit integer data is stored in the internal memory 1732 in the neural processor 177 and 8-bit weight data 1731 is received, the operator 1734 may be configured to perform an operation based on the 8-bit integer data and output an operation result Srt according to an operation request Srg.

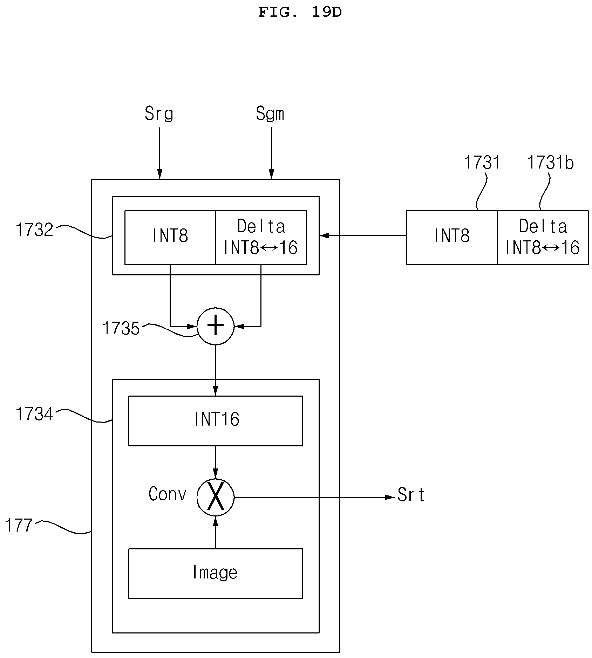

. FIG. 19D illustrates an example of the quantization transform according to the embodiment of the present disclosure.

. Referring to the figure, when the 8-bit integer data and the 8-bit difference data are stored in the internal memory 1732 in the neural processor 177, the 8-bit weight data 1731 and the 8-bit differential data are received, and an operation request Srg, and second quantization mode information in quantization mode information Sgm including the first quantization mode or the second quantization mode are received, the neural processor 177 performs the concatenate operation, and outputs the 16-bit integer data through a summer 1746.

. In addition, the operator 1734 may be configured to perform the operation based on the 16-bit integer data and output the operation result Srt.

. Alternatively, when the first quantization mode information is received, the neural processor 177 outputs the 8-bit integer data without performing the concatenate operation.

. In addition, the operator 1734 may be configured to perform the operation based on the 8-bit integer data and output the operation result Srt.

. Accordingly, the neural processor 177 according to the embodiment of the present disclosure is capable of scalable coding and capable of a scalable quantization-based operation computation, and thus may be efficiently driven. Furthermore, power consumption and the like may be reduced at the time of the operation based on the 8-bit integer data.

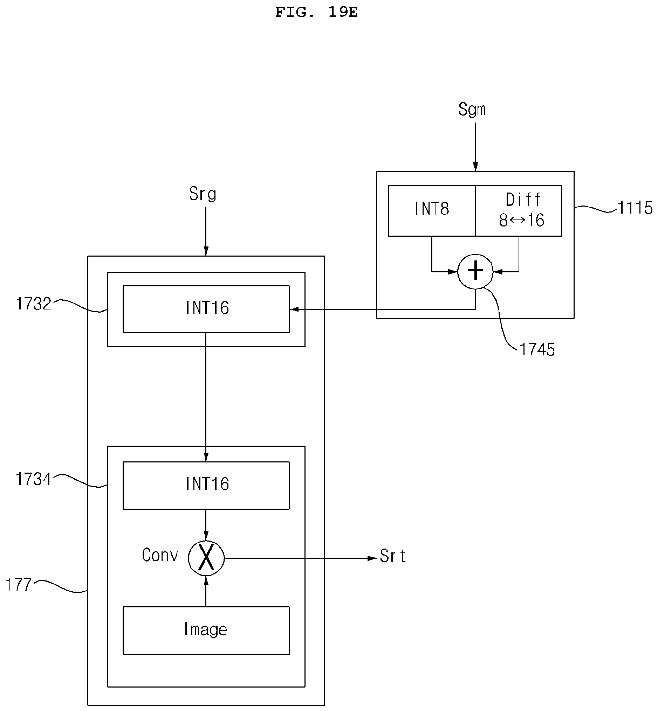

. FIG. 19E illustrates another example of the quantization transform according to the embodiment of the present disclosure.

. Referring to the figure, unlike FIG. 19D, in FIG. 19E, the server virtual machine 1115 performs, through the summer 1746, the concatenate operation and outputs the 16-bit integer data, and stores the 16-bit integer data in the internal memory 1732 in the neural processor 177.

. In addition, the operator 1734 in the neural processor 177 may be configured to perform the operation based on the 16-bit integer data and output the operation result Srt.

. Meanwhile, in the scalable accuracy coding in FIG. 19D, FIG. 19E, or the like, the output precision of the weight quantization may be transformed with only difference data operations in upper and lower stages.

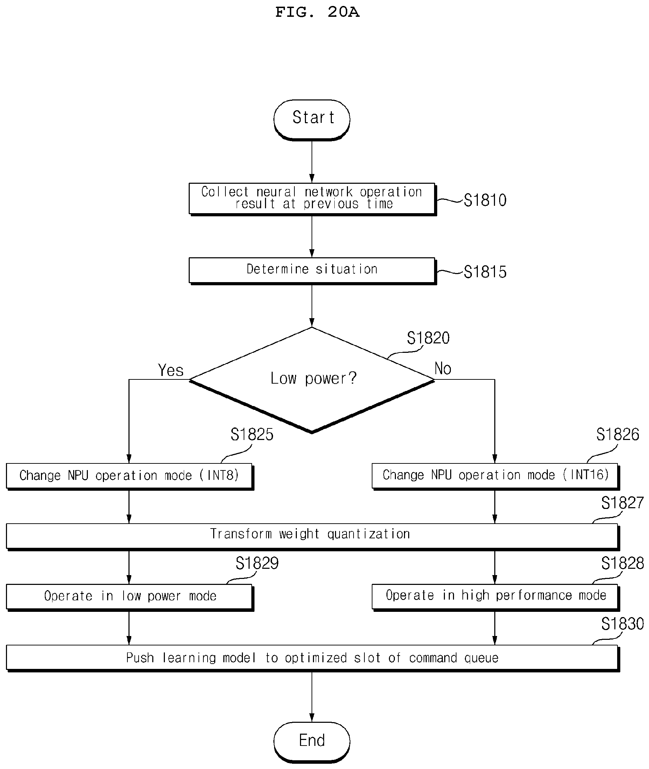

. FIG. 20A illustrates that the first quantization mode or the second quantization mode is performed according to a vehicle driving situation.

. Referring to the figure, the first virtual machine 520 may collect a neural network operation result at a previous time (S1810).

. Next, the first virtual machine 520 may determine a surrounding situation based on the neural network operation result or the like at the previous time (S1815).

. Meanwhile, the first virtual machine 520 may determine whether low-power driving is required based on the determination of the surrounding situation (S1820).

. When the low-power driving is required, the first virtual machine 520 may be configured to control the neural processor 177 to operate in the first quantization mode (S1820).

. For example, the first virtual machine 520 may be configured to control the processor 177 to operate in the first quantization mode when the number of feature points for a surrounding object (the vehicle or the pedestrian) is less than or equal to a predetermined value according to the neural network operation result at the previous time.

. The first quantization mode at this time may be an 8-bit integer based quantization mode.

. As another example, the first virtual machine 520 may be configured to control, based on GPS-based location information and map map-based location information, the neural processor 177 to operate in the first quantization mode when the vehicle travels on an out-of-town or country road with a traffic volume less than or equal to a predetermined value.

. As yet another example, the first virtual machine 520 may be configured to control the neural processor 177 to operate in the first quantization mode when a current vehicle driving speed is less than or equal to a predetermined speed.

. As still yet another example, the first virtual machine 520 may be configured to control the neural processor 177 to operate in the first quantization mode when a drivable distance to a destination or a distance to a surrounding charging station based on a vehicle remaining battery is not reached.

. Next, the first virtual machine 520 may transform a weight quantization based on the first quantization mode (S1827).

. In addition, the first virtual machine 520 may be configured to control, based on the first quantization mode, the neural processor 177 to operate in a low power mode (S1829).

. Next, the first virtual machine 520 may be configured to control the learning model data to be input to an optimized slot of the command queue (S1830). Accordingly, the operation based on the first quantization mode may be performed.

. Meanwhile, in step 1820 (S1820), when the mode is not the low power mode, the first virtual machine 520 may be configured to control the neural processor 177 to operate in the second quantization mode (S1826).

. For example, the first virtual machine 520 may be configured to control the processor 177 to operate in the second quantization mode when the number of feature points for the surrounding object (the vehicle or the pedestrian) is more than the predetermined value or a detection rate of the surrounding object (the vehicle or the pedestrian) is more than a set value, according to the neural network operation result at the previous time.

. The second quantization mode at this time may be a 16-bit integer based quantization mode.

. As another example, the first virtual machine 520 may be configured to control, based on the GPS-based location information and the map map-based location information, the neural processor 177 to operate in the second quantization mode when the vehicle travels on a city or a highway with a traffic volume more than the predetermined value.

. As yet another example, the first virtual machine 520 may be configured to control the neural processor 177 to operate in the second quantization mode when the current vehicle driving speed is more than the predetermined speed.

. Next, the first virtual machine 520 may transform the weight quantization based on the second quantization mode (S1827).

. In addition, the first virtual machine 520 may be configured to control, based on the second quantization mode, the neural processor 177 to operate in a high performance mode (S1828).

. Next, the first virtual machine 520 may be configured to control the learning model data to be input into the optimized slot of the command queue (S1830). Accordingly, the operation based on the second quantization mode may be performed.

. Meanwhile, according to FIG. 20A, the quantization mode may be varied based on a vehicle speed or location information or the number of feature points in an image.

. For example, when the number of feature points for the surrounding object (the vehicle or the pedestrian) is less than or equal to N in a camera image when driving, since an environmental element to be focused on for safe driving is small, the first virtual machine 520 may be configured to control an operation mode of the neural processor 177 to switch from the second quantization mode based on the 16-bit integer to the first quantization mode base on the 8-bit integer. Accordingly, power consumption may be reduced.

. As another example, if there is no detected object, when the first virtual machine 520 operates in the first quantization mode, and then the vehicle enters the city based on location information from a GPS or location information in a map, the first virtual machine 520 may be configured to control to switch the first 8-bit integer based quantization mode to the second 16-bit integer based quantization mode. Accordingly, the accuracy of the operation may be enhanced.

. As yet another example, when the vehicle travels in the city, but the vehicle speed is less than or equal to a reference speed, the first virtual machine 520 may be configured to control the operation mode of the neural processor 177 to switch from the 16-bit integer based second quantization mode to the 8-bit integrated based first quantization mode. Accordingly, power consumption may be reduced.

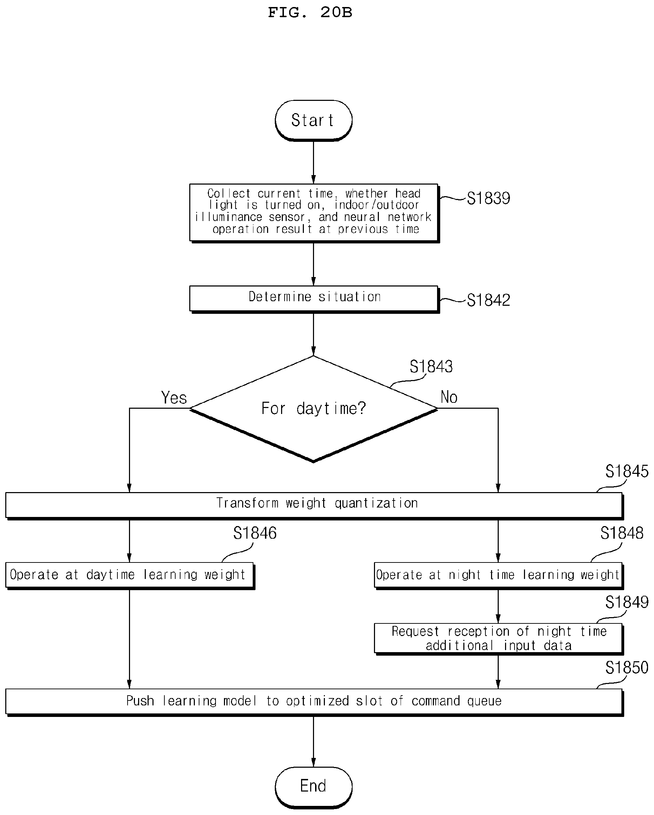

. FIG. 20B illustrates that the daytime mode or the night time mode is performed.

. Referring to the figure, the first virtual machine 520 may collect the sensor data, and the neural network operation result at the previous time (S1839).

. For example, the first virtual machine 520 may collect sensor data such as current time data, headline ignition status data, indoor-outdoor illumination sensor data, and the like, and the neural network operation result of the previous time.

. Next, the first virtual machine 520 may determine a surrounding situation based on the sensor data, and the neural network operation result at the previous time (S1842).

. Meanwhile, the first virtual machine 520 may determine whether daytime driving is required based on the determination of the surrounding situation (S1843).

. When the daytime driving is required, the first virtual machine 520 may be configured to control the neural processor 177 to operate in the second quantization mode or the daytime mode.

. The second quantization mode at this time may be the 16-bit integer based quantization mode.

. Next, the first virtual machine 520 may transform the weight quantization based on the second quantization mode (S1845).

. In addition, the first virtual machine 520 may be configured to control, based on the second quantization mode, to operate at a daytime learning weight (S1846).

. Next, the first virtual machine 520 may be configured to control the learning model data to be input into the optimized slot of the command queue (S1850). Accordingly, the operation based on the second quantization mode may be performed.

. Meanwhile, in step 1843 (S1843), when the daytime driving is not performed, the first virtual machine 520 may determine that night time driving is required, and control the neural processor 177 to operate in the first quantization mode or the night time mode.

. The first quantization mode at this time may be the 8-bit integer based quantization mode.

. Next, the first virtual machine 520 may transform the weight quantization based on the first quantization mode (S1845).

. In addition, the first virtual machine 520 may be configured to control, based on the first quantization mode, to operate at a night time learning weight (S1848).

. Meanwhile, the first virtual machine 520 may transmit, when night time additional data is required, transmit a reception request of the night time additional data (S1849), and the night time additional data based thereon.

. The night time additional data at this time may be IR camera data instead of existing RGB camera data.

. In addition, the first virtual machine 520 may be configured to control the learning model data to be input into the optimized slot of the command queue based on the night time additional data, etc. (S1850). Accordingly, the operation based on the first quantization mode may be performed.

. Meanwhile, referring to FIG. 20B, the first virtual machine 520 may be configured to control the neural processor 177 to operate in the night time mode when a vehicle headlight is automatically turned on by an illuminance sensor in a night time zone (for example, 6 p.m.) based on a current time. The night time mode at this time may be the first quantization mode.

. As another example, the first virtual machine 520 may be configured to control the neural processor 177 to operate in the night time mode when the number of feature points for the surrounding object (the vehicle or the pedestrian) is less than or equal to the predetermined value according to the neural network operation result at the previous time.

. As yet another example, the first virtual machine 520 may be configured to control the neural processor 177 to operate in the night time mode at the current time or when room light is turned on from a room illuminance sensor.

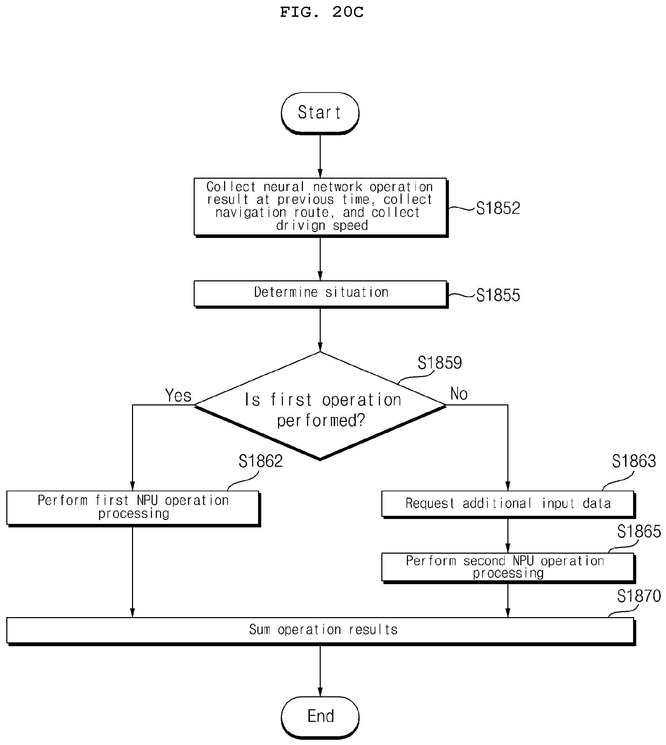

. FIG. 20C illustrates that the operation mode of the first neural processor or the operation mode of a second neural processor is performed.

. Referring to the figure, the first virtual machine 520 may collect the sensor data, and the neural network operation result at the previous time (S1852).

. In particular, the first virtual machine 520 may collect navigation route data, driving speed data, and the neural network operation result at the previous time.

. Next, the first virtual machine 520 may determine a situation based on the sensor data, and the neural network operation result at the previous time (S1855).

. Meanwhile, the first virtual machine 520 may determine whether a first operation is required based on the determination of the situation (S1859).

. When the first operation is required, the first virtual machine 520 may be configured to control the first neural processor 177a to operate for the first operation (S1862).

. Meanwhile, in step 1859 (S1859), when a second operation is also required in addition to the first operation, the first virtual machine 520 may request additional input data for AN additional operation (S1863), and control the second neural processor 177b to operate for the second operation based on the additional input data (S1865).

. In addition, the first virtual machine 520 may sum a first operation result in the first neural processor 177a and an operation result of the second neural processor 177b, and output a summed result (S1870).

. Meanwhile, the first virtual machine 520 may be configured to control the first neural processor 177a to perform the first operation for a front camera and the second neural processor 177b to perform the second operation for a surrounding camera.

. In particular, the first virtual machine 520 may be configured to control the first neural processor 177a to not always use external cameras of a plurality of vehicles, but perform the first operation for a default front camera, and then when a high performance operation is required, control the second neural processor 177b to perform the second operation for surrounding cameras other than the front camera.

. For example, in a state of traveling on the highway and using a cruise control, when the cruise control at a previous time determines that a current lane is maintained, the first virtual machine 520 may stop an operation of camera data from surrounding cameras, or switch the operation of the camera data from the surrounding cameras to the first quantization mode which is the low power mode, and control an operation of camera data from the front camera to be performed in the second quantization mode which is the high performance mode.

. Meanwhile, when a condition that a lane change is required, such as a preceding vehicle lagging behind a surrounding vehicle, is formed, the first virtual machine 520 may be configured to control the second neural processor 177b to perform the second operation of the camera data from the surrounding cameras again.

. Meanwhile, the first virtual machine 520 may be configured to control the second neural processor 177b to stop the operation on the camera data from the surrounding camera or to perform the operation in the first quantization mode when it is determined that a route is straight to a predetermined distance, and control the first neural processor 177a to perform the operation in the second quantization mode which is the high performance mode at the time of the operation of the camera data for the front camera.

. Meanwhile, when the vehicle is adjacent to a crossroad within a predetermined distance and a vehicle steering AR guidance such as left turn, right turn, etc., the first virtual machine 520 may be configured to control the second neural processor 177b to perform the operation for the camera data from the surround ding camera, and accurately determine a shape of the crossroad from multiple angles in order to display an accurate steering position by AR.

. Meanwhile, the first virtual machine 520 may be configured to control the first neural processor 177a to perform a first operation for preceding detection for a wake-up word in voice data, and the second neural processor 177b to perform subsequent dialogue detection.

. For example, the first virtual machine 520 may be configured to control the first neural processor 177a to perform an operation for recognition of the wake-up word which is a user voice, such as "Hi LG", and progress of a dialogue with a user.

. At this time, when it is difficult to detect the wake-up word due to ambient noise such as passenger noise or vehicle road noise, the first virtual machine 520 may be configured to control the second neural processor 177b to perform a noise canceling operation.

. Meanwhile, when the wake-up word is recognized through the first neural processor 177a, the first virtual machine 520 may be configured to control the second neural processor 177b to perform an overall speech recognition operation for detecting the dialogue with the user and a request, and control the first neural processor 177a to perform an operation for detecting recognition of the wake-up word by other users.

. Meanwhile, when the vehicle is personalized by a plurality of user accounts, the first virtual machine 520 may be configured to control the first neural processor 177a to perform a wake-up word detection operation of a first user, and the second neural processor 177b to perform a wake-up word detection operation of a second user.

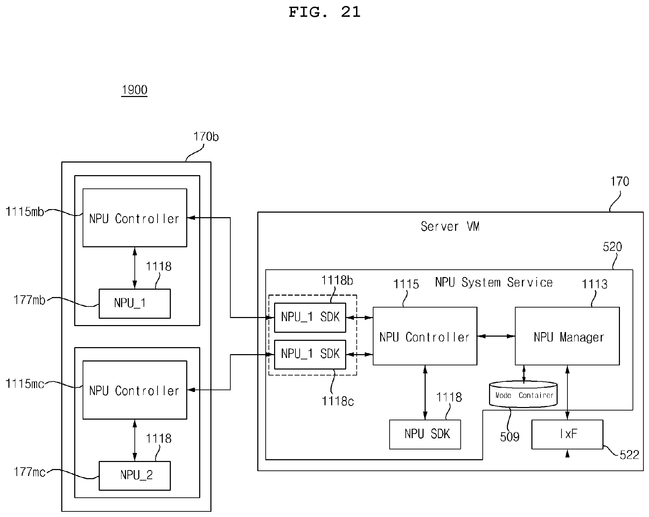

. FIG. 21 is a view showing parallel processing between the signal processing device and an external device.

. Referring to the figure, the signal processing device 170 according to another embodiment of the present disclosure controls, when an external device is in a connected state, to transmit data to a neural processor in the external device to perform an operation.

. Specifically, the signal processing device 170 according to another embodiment of the present disclosure includes a central processor 175 and a neural processor 177, and the central processor 175 executes a first virtual machine 520 that is a server virtual machine on a hypervisor 505.

. Meanwhile, in response to the external device being in the connected state, the first virtual machine 520 is configured to transmit data to a second neural processor in the external device. Accordingly, it is possible to efficiently operate the neural processor.

. Meanwhile, the first virtual machine 520 may be configured to perform load balancing for load distribution between the neural processor and the second neural processor. Accordingly, it is possible to efficiently operate the neural processor.

. Meanwhile, in response to the external device being connected, the first virtual machine 520 may be configured to download an application for controlling the external device from a server, installed, and executed. Accordingly, communication with the external device may be stably performed.

. Meanwhile, the first virtual machine 520 may receive result data from the external device and transmit the result data to the neural processor 177a. Accordingly, it is possible to efficiently operate the neural processor.

. Meanwhile, the first virtual machine 520 may receive the result data and battery information from the external device, and control the result data to be stored in the shared memory 508 in the hypervisor 505. Accordingly, the result data may be shared. Consequently, it is possible to efficiently operate the neural processor.

. Although the second signal processing device 170b is illustrated as the external device in the figure, the present disclosure is not limited thereto, and a mobile terminal, a server, or the like is also possible.

. Meanwhile, the first virtual machine 520 may execute a neural system service 1110 for controlling at least one of the neural processor 177a to 177c.

. Meanwhile, the neural system service 1110 may execute or include a neural manager 1113 for managing at least one of the neural processors 177a to 177c, a neural controller 1115 for determining or controlling an inference scheme of at least one of the neural processors 177a to 177c, and a neural interface 1118 for interfacing with the at least one of the neural processors 177a to 177c.

. Meanwhile, the neural system service 1110 may further execute or include a model container 509 that performs an interface of model parameters related to the operation of the neural processor 177 and version management of a learning file.

. Meanwhile, the second signal processing device 170b may include neural processors 177mb and 177mc, and neural controllers 1115mb and 1115mc for controlling the neural processors 176mb and 176mc.

. Although each of the neural controllers 1115mb and 1115mc for two neural processors 177mb and 177mc is illustrated in the figure, it is also possible that one neural controller is provided unlike this.

. Meanwhile, for interfacing with two neural processors 177mb and 177mc in the second signal processing device 170b, the neural interface 1118 may include a first neural interface 1118b and a second neural interface 1118c.

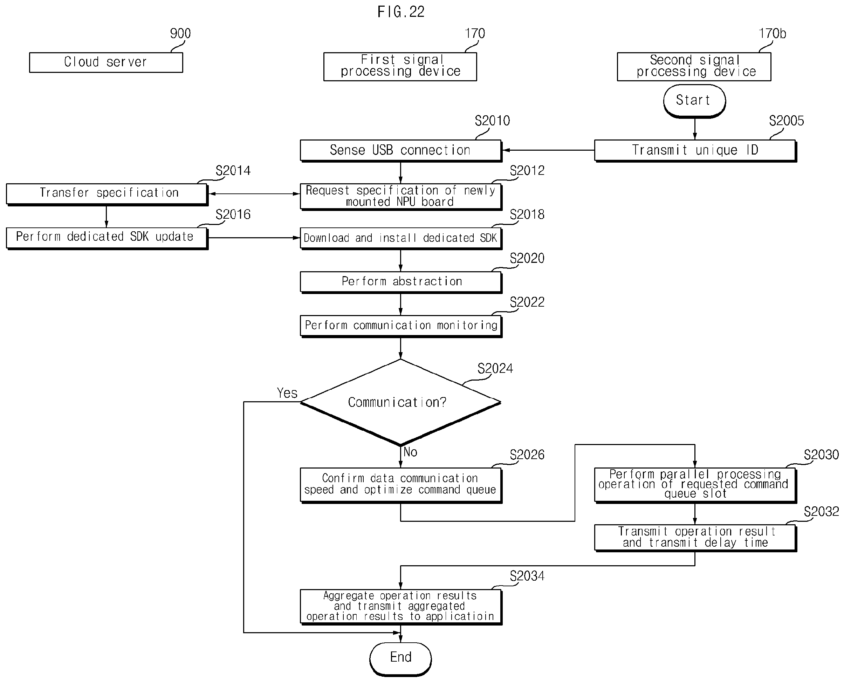

. FIG. 22 is a flowchart showing examples of the an operating methods of the signal processing device and the second signal processing device in FIG. 21.

. Referring to the figure, the second signal processing device 170b may transmit unique ID information when wiredly connected to the signal processing device 170 (S2005).

. Correspondingly, the signal processing device 170 may receive the unique ID information from the second signal processing device 170b, and sense a wired connection based on the unique ID information (S2010).

. Next, the signal processing device 170 may transmit a specification information request for a newly connected or mounted second signal processing device 170b to a server 900 (S2012).

. Correspondingly, the server 900 may transmit specification information for the second signal processing device 170b to the signal processing device 170 (S2014).

. Additionally, when there is update information or an application for controlling the second signal processing device, the server 900 may transmit, to the signal processing device 170, the update information for the second signal processing device 170b the application for controlling the first signal processing device (S2016).

. Correspondingly, the signal processing device 170 may receive the update information or the application for controlling the second signal processing device 170b, and install an application for updating the second signal processing device 170b or controlling the second signal processing device (S2018).

. Next, the signal processing device 170 may be configured to perform abstraction on the neural processor 177 therein (S2020) and may be configured to perform monitoring on the neural processor 177 (S2022).

. Meanwhile, the signal processing device 170 may determine whether the signal processing device 170 is in communication connection with the second signal processing device 170b (S2024), and when the signal processing device 170 is in communication connection with the second signal processing device 170b, the signal processing device 170 may confirm a data communication speed with the second signal processor 170b and request the second signal processor 170b to optimize the command queue (S2026).

. Correspondingly, the second signal processing device 170b may be configured to perform optimization of the command queue for the second neural processor inside the second signal processing device (S2030).

. For example, the second signal processing device 170b may be configured to perform parallel operation processing of a command queue slot on the second neural processor inside the second signal processing device.

. Next, the second signal processing device 170b may transmit result data for operation processing and delay time information to the signal processing device 170 (S2032).

. Correspondingly, the signal processing device 170 may aggregate the operation processing result data of the internal neural processor 177 and the operation processing result data of the second signal processing device 170b, and transmit the aggregated result data to an application that requests the operation (S2034).

. Accordingly, the neural processor may be efficiently operated using the second signal processing device 170b that is the external device.

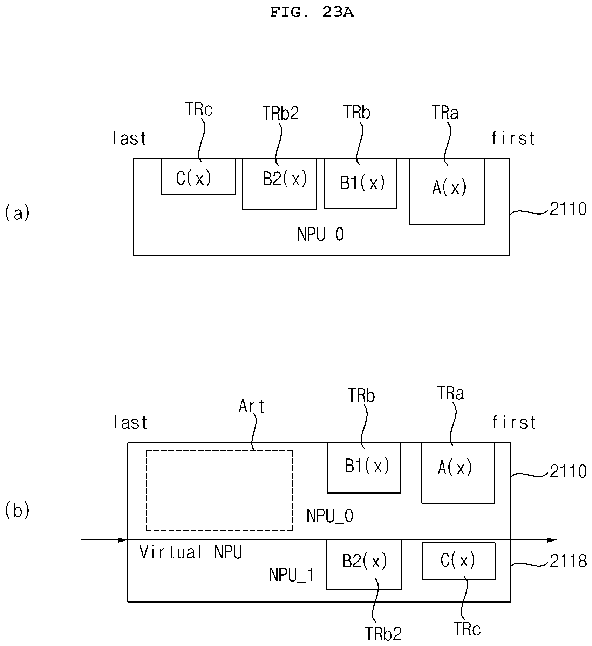

. FIG. 23A is a view showing various examples of queuing using the signal processing device and the second signal processing device.

. Referring to the figure, (a) ofFIG. 23A is a view showing sequential queuing.

. Referring to the figure, the first virtual machine 520 may be configured to control a plurality of operations TRa, TRb, TRb2, and TRc from a plurality of applications executed in at least one of the plurality of virtual machines 520 to 540 to be sequentially arranged in the first neural processor 2110 in the signal processing device 170..

. According to a sequential operation scheme according to the sequential arrangement, there is a disadvantage in that the first neural processor 2110 may not be operated efficiently, and thus it takes a considerable amount of time until the plurality of operations RRa, RRb1, RRbc, and RRb2 are completed.

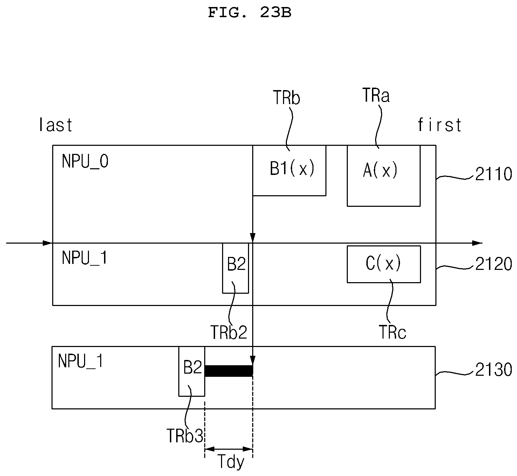

. Referring to the figure, (b) of FIG. 23Ais a view showing an example of optimization queuing using the signal processing device 170 and the second signal processing device 170b.

. Referring to the figure, the first virtual machine 520 in the signal processing device 170 may be configured to control a first operation TRa and a second operation TRb to be sequentially placed in a first neural processor 2110 in the signal processing device 170, and a third operation TRc and a fourth operation TRb2 to be sequentially placed in a second neural processor 2118 in the second signal processing device 170b, and the first operation TRa and a third operation TRc to be simultaneously performed in parallel, and the second operation TRb and a fourth operation TRb2 to be simultaneously performed in parallel.

. Accordingly, a free space such as Art may be secured in the first neural processor 2110 in the signal processing device 170, and an additional operation may be performed through the free space Art. Accordingly, it is possible to efficiently operate the neural processor. Furthermore, power consumption may be reduced.

. FIG. 23B is a view showing a communication delay between the signal processing device and the second signal processing device.

. Referring to the figure, the first virtual machine 520 in the signal processing device 170 may be configured to control the first operation TRa and the second operation TRb to be sequentially placed and operated in the first neural processor 2110 in the signal processing device 170, and the third operation TRc and the fourth operation TRb2 to be sequentially placed and operated in the second neural processor 2120 in the second signal processing device 170b.

. The second neural processor 2120 in the second signal processing device 170b represents a sequence and an operation of the ideal third operation TRc and fourth operation TRb2.

. At this time, a communication delay Tdy between the signal processing device 170 and the second signal processing device 170b may occur, and thus the second neural processor 2130 in the second signal processing device 170b may be configured to perform a fourth operation TRb3 with an actual Tdy delay.

. Accordingly, as in step 2032 (S2032) of FIG. 22, the second signal processing device 170b preferably is configured to transmit the result data for the operation processing and the delay time information Tdy to the signal processing device 170.

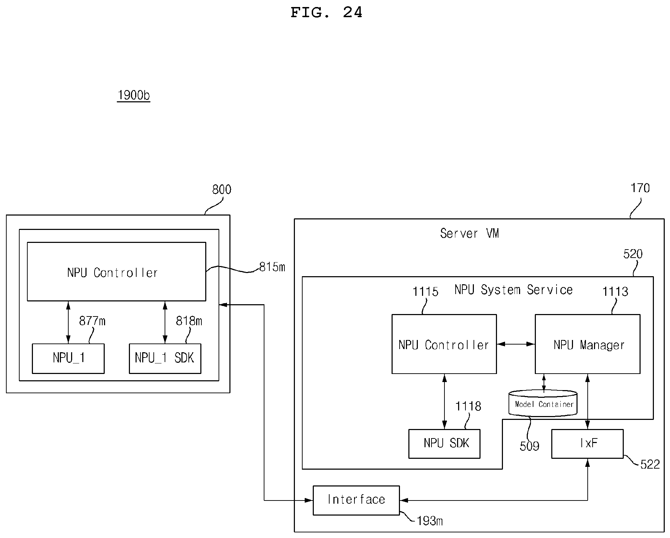

. FIG. 24 is a view showing that the signal processing device and the external device are wirelessly connected.

. Referring to the figure, when an external device 800 is wirelessly connected, the signal processing device 170 according to another embodiment of the present disclosure may be configured to control, through the communication device 120, wireless pairing to be performed, and data to be transmitted to the second neural processor in the external device after the wireless pairing is completed.

. In particular, the central processor 175 in the signal processing device 170 may execute the server virtual machine 530, and the server virtual machine 530 may execute the neural system service 1110 for controlling at least one of the neural processors 177a to 177c.

. Meanwhile, the neural system service 1110 may execute or include a neural manager 1113 for managing at least one of the neural processors 177a to 177c, a neural controller 1115 for determining or controlling an inference scheme of at least one of the neural processors 177a to 177c, and a neural interface 1118 for interfacing with the at least one of the neural processors 177a to 177c.

. Meanwhile, the neural system service 1110 may further execute or include a model container 509 that performs an interface of model parameters related to the operation of the neural processor 177 and version management of a learning file.

. Meanwhile, the external device 800 may include a neural processor 877m, a neural controller 815m for controlling the neural processor 877m, and an interface 818m.

. Meanwhile, the external device 800 may be a mobile terminal or a server.

. Meanwhile, in response to the external device being wirelessly connected, the first virtual machine 520 may transmit data to the second neural processor 877m in the external device. Accordingly, it is possible to efficiently operate the neural processor.

. In particular, when the external device 800 is wirelessly connected, the central processor 175 in the signal processing device 170 may be configured to control, through the communication device 120, wireless pairing to be performed, and data to be transmitted to the second neural processor 877m in the external device 800 after the wireless pairing is completed. Accordingly, it is possible to efficiently operate the neural processor.

. Meanwhile, when the external device 800 is a device including a battery, the first virtual machine 520 in the signal processing device 170 preferably receive battery information from the external device 800 for operation processing based on the battery information.

. Meanwhile, based on the battery information received from the external device 800, the first virtual machine 520 in the signal processing device 170 may be configured to control to back up operation result data in the shared memory 508 during the operation processing of the external device 800.

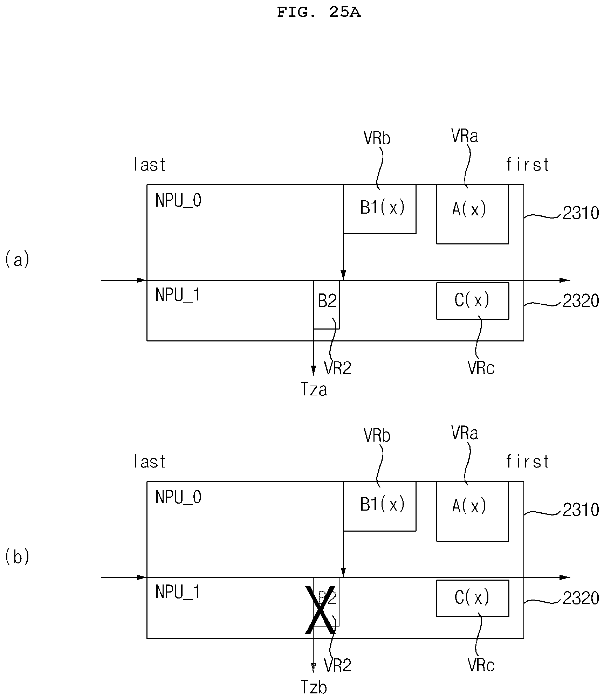

. FIG. 25A is a view showing that an intermediate backup is not performed during the operation processing of the external device.

. Referring to the figure, as in (a) of FIG. 25A, the first virtual machine 520 in the signal processing device 170 may be configured to control a first operation VRa and a second operation VRb to be sequentially placed in a first neural processor 2310 in the signal processing device 170, and a third operation VRc and a fourth operation VRb2 to be sequentially placed in a second neural processor 2320 in the external device 800, and the first operation VRa and the third operation VRc to be simultaneously performed in parallel.

. Meanwhile, when a battery level is equal to or lower than a predetermined level, an operation of the external device 800 operating based on the battery may be terminated while performing the fourth operation VRb2, as illustrated in (b) of FIG. 25A.

. Meanwhile, since the fourth operation VRb2 performs an operation based on a result of the second operation VRb, when the operation is terminated during the performance of the fourth operation VRa2, even if a new battery is mounted or a new power is supplied, the fourth operation VRb2 is not smoothly performed again.

. Therefore, in the present disclosure, through the intermediate backup, result data of an operation that has already been performed is controlled to be backed up in the shared memory 508 or the like.

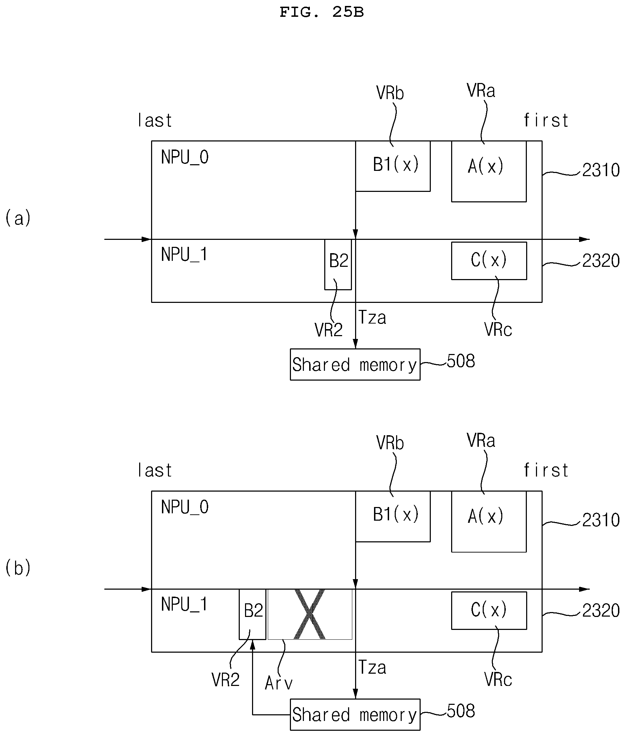

. FIG. 25B is a view showing that the intermediate backup is performed during the operation processing of the external device.

. Referring to the figure, as in (a) of FIG. 25A, the first virtual machine 520 in the signal processing device 170 may be configured to control the first operation VRa and the second operation VRb to be sequentially placed in the first neural processor 2310 in the signal processing device 170, and the third operation VRc and the fourth operation VRb2 to be sequentially placed in the second neural processor 2320 in the external device 800, and the first operation VRa and the third operation VRc to be simultaneously performed in parallel.

. Meanwhile, the first virtual machine 520 may be configured to control, for the intermediate backup, result data of the first operation VRa and the second operation VRb to be stored in the shared memory 508 after the termination of the second operation VRb.

. Meanwhile, when the battery level is equal to or lower than the predetermined level, the operation of the external device 800 operating based on the battery may be terminated while performing the fourth operation VRb2, as illustrated in (b) of FIG. 25A.

. Meanwhile, since the result data of the first operation VRa and the second operation VRb is stored in the shared memory 508, when a new battery is mounted on or a new power is supplied to the external device 800, the fourth operation VRb2 may be performed immediately successively thereafter. Accordingly, a stable and rapid operation is enabled to be performed.

. While the preferred embodiments of the present disclosure have been illustrated and described above, the present disclosure is not limited to the aforementioned specific embodiments, various modifications may be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. A signal processing device comprising:
at least one neural processor; and
a central processor configured to execute a hypervisor,
wherein the central processor is configured to execute a plurality of virtual machines on the hypervisor, and
wherein in a state of sequentially receiving a request of a first operation, a request of a second operation, and a request of a third operation from a plurality of applications executed in at least one of the plurality of virtual machines, a first virtual machine among the plurality of virtual machines is configured to control a first neural processor to process the first operation and the third operation in parallel, and process the second operation after completion of the first operation and the second operation in response to the first operation and the third operation being enabled to process in parallel.

2. The signal processing device of claim 1, wherein in response to operation layers being enabled to be shared at the time of the second operation and a fourth operation in a state of receiving a request of the fourth operation after the request of the third operation, the first virtual machine is configured to control the first neural processor to successively process the second operation and the fourth operation after completion of the first operation and the third operation.

3. The signal processing device of claim 1, wherein at the time of requesting a plurality of operations from the plurality of applications, the first virtual machine is configured to change an arrangement of data for the plurality of operations in an internal memory in the first neural processor.

4. The signal processing device of claim 1, wherein the first virtual machine is configured to execute a neural system service for controlling the neural processor, and
at the time of requesting the plurality of operations from the plurality of applications, the neural system service is configured to change an arrangement of data for the plurality of operations in the internal memory in the first neural processor.

5. The signal processing device of claim 1, wherein the first virtual machine is configured to:
initialize a learning model based on a learning model initialization request from the application,
receive a file related to the learning model stored in a shared memory, and store the received file related to the learning model in the internal memory in the first neural processor,
control the first neural processor to process data corresponding to the first operation and data corresponding to the third operation among sensor data or camera data stored in the shared memory in parallel based on an inference request from the application, and
process data corresponding to the second operation among the sensor data or camera data stored in the shared memory after the completion of the first operation and the third operation.

6. The signal processing device of claim 1, wherein the first virtual machine is configured to store processing result data of each of the first operation to the third operation in the shared memory in the hypervisor.

7. The signal processing device of claim 1, wherein the first virtual machine is configured to decrease a discretization level of the second operation from a first level to a second level in the case of an energy saving mode or in response to no object being detected for a predetermined time based on a result of the first operation.

8. The signal processing device of claim 1, wherein the first virtual machine is configured to control the first neural processor to perform the first operation to the third operation in response to the central processor not being enabled to perform the first operation to the third operation.

9. The signal processing device of claim 1, wherein the first virtual machine is configured to control the central processor to process the first operation and the third operation in parallel, and process the second operation after the completion of the first operation and the third operation in response to the central processor being enabled to perform the first operation to the third operation, and the first operation and the third operation being enabled to process in parallel.

10. The signal processing device of claim 1, wherein the first neural processor includes:
an internal memory configured to store weight data or input data, and
an operator configured to perform an operation based on data from the internal memory.

11. The signal processing device of claim 1, wherein the first neural processor is configured to:
perform at least one of the first operation to the third operation based on input data of a first length according to a first quantization mode, and
perform at least one of the first operation to the third operation based on input data of a second length longer than the first length according to a second quantization mode.

12. The signal processing device of claim 1, wherein the first neural processor is configured to:
perform at least one of the first operation to the third operation based on input data of a first length according to a first quantization mode, and
perform a concatenate operation based on the input data of the first length, and difference data corresponding to the input data of the first length according to a second quantization mode, generate input data of a second length longer than the first length based on the concatenate operation, and perform at least one of the first operation to the third operation based on the input data of the second length.

13. The signal processing device of claim 11, wherein the first neural processor is configured to perform at least one of the first operation to the third operation based on the second quantization mode, and then switch to the first quantization mode in response to the number of feature points of a detection object being equal to or less than a predetermined value based on result data of at least one of the first operation to the third operation.

14. The signal processing device of claim 11, wherein the first neural processor is configured to:
perform at least one of the first operation to the third operation based on the second quantization mode or a daytime mode at the time of daytime driving of a vehicle, and
perform at least one of the first operation to the third operation based on the first quantization mode or a night time driving mode at the time of night time driving of the vehicle.

15. The signal processing device of claim 1, wherein the first virtual machine is configured to:
in response to a request of a fourth operation being received from the plurality of applications, control a second neural processor to process the fourth operation,
control the second neural processor to perform the fourth operation based on input data of a first length according to a first quantization mode, and
control the first neural processor to perform at least one of the first operation to the third operation based on input data of a second length longer than the first length according to a second quantization mode.

16. A signal processing device comprising:
a central processor configured to execute a hypervisor; and
a neural processor,
wherein the signal processing device is configured to wiredly or wirelessly exchange data with an external device including a second neural processor,
wherein the central processor is configured to execute a plurality of virtual machines on the hypervisor, and
wherein a first virtual machine among the plurality of virtual machines is configured to transmit data to the second neural processor in the external device, in response to the external device being in a connected state.

17. The signal processing device of claim 16, wherein in response to the external device being wirelessly connected, the central processor is configured to perform wireless pairing through a communication device, and transmit data to the second neural processor in the external device after completion of the wireless pairing.

18. The signal processing device of claim 16, wherein the first virtual machine is configured to receive result data from the external device, and transmit the result data to the neural processor.

19. The signal processing device of claim 16, wherein the first virtual machine is configured to receive the result data from the external device and battery information, and store the result data in a shared memory in the hypervisor.

20. A display apparatus for vehicle comprising a signal processing device of any one of claims 1 to 19.
